(19) Europäisches Patentamt
European Patent Office
Office européen des brevets

(11) EP 1 573 849 B1

# (12) EUROPEAN PATENT SPECIFICATION

(45) Date of publication and mention of the grant of the patent:
**24.02.2010 Bulletin 2010/08**

(21) Application number: **03813296.5**

(22) Date of filing: **01.12.2003**

(51) Int Cl.:
***H01M 8/04*** *(2006.01)*

(86) International application number:
**PCT/JP2003/015324**

(87) International publication number:
**WO 2004/055928 (01.07.2004 Gazette 2004/27)**

## (54) FUEL CELL SYSTEM

BRENNSTOFFZELLENSYSTEM

SYSTEME DE PILES A COMBUSTIBLE

(84) Designated Contracting States:
**DE FR GB**

(30) Priority: **18.12.2002 JP 2002366743**

(43) Date of publication of application:
**14.09.2005 Bulletin 2005/37**

(73) Proprietor: **NISSAN MOTOR COMPANY LIMITED**
**Yokohama-shi, Kanagawa 221-0023 (JP)**

(72) Inventor: **MATSUOKA, Naoya**
**-ku,Yokohama-shi, Kanagawa 221-0852 (JP)**

(74) Representative: **Hoefer, Theodor**
**Patentanwälte**
**Gabriel-Max-Strasse 29**
**81545 München (DE)**

(56) References cited:
**WO-A-00/42671**
**WO-A-01/91216**
**US-A1- 2001 010 875**
**US-A1- 2002 192 520**
**US-B1- 6 376 111**
**US-B1- 6 635 374**

- **PATENT ABSTRACTS OF JAPAN vol. 2000, no. 09, 13 October 2000 (2000-10-13) & JP 2000 164231 A (TOSHIBA CORP.), 16 June 2000 (2000-06-16)**
- **PATENT ABSTRACTS OF JAPAN vol. 009, no. 118 (E-316), 23 May 1985 (1985-05-23) & JP 60 007068 A (TOSHIBA CORP.), 14 January 1985 (1985-01-14)**
- **PATENT ABSTRACTS OF JAPAN vol. 2002, no. 11, 6 November 2002 (2002-11-06) & JP 2002 208421 A (DENSO CORP.), 26 July 2002 (2002-07-26) cited in the application**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 573 849 B1

## Description

### FIELD OF THE INVENTION

This invention relates to the prevention of the blockage of gas supply due to frozen moisture in a fuel cell restarting at low temperatures.

### BACKGROUND OF THE INVENTION

In a polymer electrolyte fuel cell (PEFC) which generates power through an electrochemical reaction using hydrogen and oxygen, reactant gas is likely to be obstructed from reaching the electrode catalyst reaction portion,when moisture in the vicinity of the electrodes freezes at low temperatures lower than zero degrees centigrade.

Here, reactant gas refers to hydrogen or oxygen. Moreover, when the membrane electrolyte freezes, electrical conductivity deteriorates due to a lack of moisture. In such a situation, an electrochemical reaction is not produced even when fuel gas is supplied to the fuel cell, and hence it may be impossible to start the fuel cell.

In order to prevent freezing of a fuel cell at low temperatures, JP2002-208421A, published by the Japan Patent Office in 2002, proposes that dry gas be circulated through the interior of the fuel cell when the fuel cell stops generating power. By means of the circulation of dry gas, the moisture in the interior of the fuel cell is removed, and hence freezing is avoided.

### SUMMARY OF THE INVENTION

When no moisture remains in the interior of the fuel cell, the freezing of moisture inside the fuel cell does not occur even at low temperatures, and when the fuel cell is restarted, reactant gas is ensured of reaching the electrolyte catalyst reaction portion. In the prior art, however, dry gas circulation causes the electrolyte membrane to dry out. Hence when the fuel cell is started, the electrolyte membrane must be returned to a wet condition. In the case of a polymer electrolyte fuel cell, the electrolyte membrane is provided as a membrane electrolyte assembly (MEA) in which the anode and cathode are integrated. The wet condition of the MEA is detected by monitoring the output voltage of the fuel cell, but variations in the output voltage of the fuel cell are unresponsive to variation in the wet condition of the electrolyte membrane, and it is therefore difficult to precisely grasp the wet condition of the electrolyte membrane. US 6,635,374 B1 relates to a water supply system for a fuel cell, for supplying compressed air having an ideal humidity for the fuel cell. The water supply system for the fuel cell comprises a water supply valve responsible for a supply quantity of water to be injected from a water tank into an air intake path, a compressor compressing air taken from the air intake path after the water injection, a cooler cooling compressed air delivered from the compressor to supply cooled air to the fuel cell, a set of detectors detecting a flow rate, a pressure and a temperature of compressed air to be supplied to the fuel cell, a water quantity calculator calculating a necessary water quantity for the fuel cell based on a detected flow rate, pressure, and temperature of the compressed air to be supplied to the fuel cell, and a water quantity controller controlling the water supply valve to supply the necessary water quantity.

A quantity of water to be injected to the air intake path from the water tank is supplied through a water supply valve, air is taken in from the intake path and compressed after water injection, air delivered from the compressor is cooled, and the cooled air is supplied to the fuel cell, an ideally demanded quantity of water for the fuel cell is calculated based on a detected flow rate, pressure, and temperature of compressed air to be supplied to the fuel cell, and the water supply valve is controlled so as to achieve this quantity of water, thereby achieving highly precise humidity control and also achieving the maximum possible electrical generating efficiency. However, this system does not prevent an ice from blocking the gas supply in the fuel cell on restarting under freezing temperature.

US 2002/192520 A1 concerns a fuel cell system and, more particularly, a fuel cell system, wherein said fuel cell system comprises a polymer electrolyte type fuel cell formed by stacking unit cells, each of which has an electrolyte membrane sandwiched by two electrodes, the system including a fuel gas supplier that supplies a fuel gas to the fuel cell, a fuel gas humidifier that humidifies the fuel gas, a current detector that detects an electric current outputted from the fuel cell, a resistance detector that detects a resistance of the fuel cell, and a humidification condition determiner that determines a condition of humidification of the electrolyte membranes based on the current detected by the current detector and the resistance detected by the resistance detector. This system provides precise determination of a condition of humidification of electrolyte membranes in a fuel cell system. However, this system does not prevent an ice from blocking the gas supply in the fuel cell on restarting under freezing temperature.

US 6,376,111 B1 relates to a system for controlling the humidity level of a fuel cell. The system includes a fuel cell, a humidifier for humidifying the fuel cell, and a controller for determining the humidity level of the fuel cell and controlling the humidifier in response to the determined humidity level. The resistance of the fuel cell varies as a function of the humidity level of the fuel cell. Thus, in a preferred system, the controller calculates the resistance of the fuel cell to determine the humidity level of the fuel cell. In said system no moisture-adjusted gas generating mechanism is provided which is controlled by a programmable controller, taking into account the temperature of the fuel cell.

WO 01/91216 A discloses a fuel cell system including a stack of fuel cells, each having polymer electrolyte membrane, a humidifier and a controller, which is responsive to detected outputs of a displacement sensor and a temperature sensor, thereby discriminating whether the membrane located in the stack remains in a dry state or is in a wet state.

US 2001/010875 A1 discloses a humidification system for humidifying a fuel cell which comprises a water-permeable-type humidifier for humidifying a reaction gas used in a reaction with moisture in an exhaust gas exhausted after the reaction; and an adjuster for adjusting an amount of humidification to a humidification amount required by the fuel cell. With this humidifying system the ratio of the reaction gas which flows through the humidifier to all of the reaction gas supplied to the fuel cell can be increased, or the ratio of the exhaust gas which flows through the humidifier to all of the exhaust gas exhausted from the fuel cell can be increased. By means of this, the amount of humidification can be increased depending on the amount of humidification required by the fuel cell. Furthermore, the ratio of the reaction gas which flows through the humidifier to all of the reaction gas supplied to the fuel cell can be decreased, or the ratio of the exhaust gas which flows through the humidifier to all of the exhaust gas exhausted from the fuel cell can be decreased. By means of this, the amount of humidification can be decreased depending on the amount of humidification required by the fuel cell. Thus, the appropriate humidification conditions of the fuel cell can be maintained, and the fuel cell can be used most efficiently. Not disclosed is a system for preventing an ice from blocking the gas supply in the fuel cell on restarting under freezing temperature.

WO 00/42671 A relates generally to fuel cells, and more particularly to a method of maintaining a neutral water balance in a fuel cell for an automobile. The fuel cell assembly includes a water balance control system that effects water production or consumption by a fuel cell necessary to return to a balanced state within the fuel cell. The water balance control system causes such production or consumption through adjustment of the fuel cell operating temperature. The fuel cell operating temperature can be adjusted by controlling the degree of heat transfer from the fuel cell coolant. Preferably, this heat transfer is controlled through a fan cooled radiator in the coolant loop. The water balance control system can make the necessary temperature adjustments in response to one or more of a variety of factors that are indicative of the water balance state of the fuel cell. In one embodiment of the invention, a fuel cell system is operated at a reduced temperature, for example approximately 58.5 C at 30 psig under ambient conditions of 30 degrees C, 60% R. H. and 1 atm pressure, enabling the system to recover more water directly from the fuel cell and thereby eliminate the need for a condenser to recover water from the exhaust gases in the automotive system. However, this system does not prevent an ice from blocking the gas supply in the fuel cell on restarting under freezing temperature.

JP 2000 164231 A discloses a fuel cell system capable of appropriately controlling the quantity of humidification by temperature and humidity exchanging means. This system comprises a control unit for controlling the switching operation of a selector valve on the basis of the detected values of temperature sensors. However, it is difficult to precisely grasp the wet condition on the electrolyte membrane in this system.

JP 60 007068 A concerns a fuel cell system comprising a controller which equalizes the vapour pressure of the oxidizing agent and fuel with that of the electrolyte in recycle lines of fuel and oxidizing agent. The controller comprises computing means which receive output signals from the temperature and humidity sensors. As in this system no moisture-adjusted gas generating mechanism is taught, which is controlled by controlling means, adjusting the wet condition of the electrolyte membrane cannot precisely be performed.

It is therefore an object of this invention to prevent an ice from blocking the gas supply in a fuel cell on restarting under freezing temperature, while to maintain the electrolyte in a wet condition.

In order to achieve the above object, this invention provides a fuel cell system which performs power generation by means of an electrochemical reaction of a fuel gas and an oxidant gas. The system comprises fuel cells each of which comprises an anode which contacts the fuel gas, a cathode which contacts the oxidant gas, and an electrolyte membrane held between the anode and cathode, a sensor which detects a temperature of the fuel cells, a moisture-adjusted gas generating mechanism which generates moisture-adjusted gas at an arbitrary humidity, and a programmable controller.

The programmable controller is programmed to determine a target humidity based on the temperature of the fuel cells after power generation is halted, to control the moisture-adjusted gas generating mechanism such that the humidity of the moisture-adjusted gas matches the target humidity, and to control the moisture-adjusted gas generating mechanism to supply the moisture-adjusted gas adjusted to the target humidity to at least one of the anode and cathode after power generation in the fuel cells is halted.

The programmable controller may be programmed to set the target humidity higher as the temperature of the fuel cells increases.

In the fuel cell system, which further comprises a sensor which detects a wet condition of the fuel cells, the programmable controller may further be programmed to set the target humidity higher when the wet condition of the fuel cells is drier than a predetermined wet region than when the wet condition of the fuel cells is wetter than the predetermined wet region.

In said fuel cell system the programmable controller may further be programmed to modify the target humidity according to the wet condition of the fuel cells, which varies during the supply of the moisture- adjusted gas by the gas generating mechanism, and to control the gas generating mechanism such that the humidity of the moisture-adjusted gas matches the modified target humidity.

The invention further provides a fuel cell system, wherein the fuel cell system comprises a fuel cell stack comprising a stacked body of a plurality of the fuel cells, a moisture-adjusted gas inlet for supplying the moisture-adjusted gas from the moisture-adjusted gas generating mechanism to each of the fuel cells, and a moisture-adjusted gas outlet for discharging from the fuel cell stack, the moisture-adjusted gas which has discharged from each of the fuel cells, a first sensor which detects the wet condition of the fuel cell stack in the vicinity of the inlet and a second sensor which detects the wet condition of the fuel cell stack in the vicinity of the outlet, and the controller which is further programmed to set the target humidity of the moisture-adjusted gas on the basis of the wet condition of the fuel cell stack in the vicinity of the inlet, and to determine when to halt the supply of moisture-adjusted gas on the basis of the wet condition of the fuel cell stack in the vicinity of the outlet.

This invention also provides a moisture control method of fuel cell system which controls moisture-adjusted gas at an arbitrary humidity.

The method comprises determining a temperature of the fuel cells, determining a target humidity based on a temperature of the fuel cells after power generation is halted, controlling the moisture-adjusted gas generating mechanism such that the humidity of the moisture-adjusted gas matches the target humidity, and controlling the gas generating mechanism to supply the moisture-adjusted gas adjusted to the target humidity to at least one of the anode and cathode after power generation in the fuel cells is halted.

The details as well as other features and advantages of this invention are set forth in the remainder of the specification and are shown in the accompanying drawings.

## BRIEF DESCRIPTION OF THE DRAWINGS

FIG. 1 is a schematic diagram of a fuel cell system according to this invention.

FIGs. 2A and 2B are diagrams illustrating a wet condition of the fuel cell during power generation and after a supply of moisture-adjusted gas, according to this invention.

FIG. 3 is a flowchart illustrating a moisture-adjusted gas supply routine executed by a controller according to this invention after power generation is halted in the fuel cell.

FIG. 4 is similar to FIG. 1, but shows a second embodiment of this invention.

FIG. 5 is a flowchart illustrating a moisture-adjusted gas supply routine executed by a controller according to the second embodiment of this invention after power generation is halted in the fuel cell.

FIG. 6 is a diagram illustrating the characteristics of a map for determining a wet condition of the fuel cell stored by the controller according to the second embodiment of this invention.

FIG. 7 is similar to FIG. 1, but shows a third embodiment of this invention.

FIG. 8 is a flowchart illustrating a moisture-adjusted gas supply routine executed by a controller according to the third embodiment of this invention after power generation is halted in the fuel cell.

FIG. 9 is a diagram illustrating differences in the humidity of gas supplied to the anode and cathode in a fuel cell system according to a fourth embodiment of this invention after power generation is halted in the fuel cell.

FIG. 10 is a diagram illustrating the characteristics of a wet condition detector according to a fifth embodiment of this invention.

FIG. 11 is a schematic diagram of a fuel cell system according to a sixth embodiment of this invention.

FIG. 12 is a diagram illustrating temporal variation in the wet condition of a fuel cell stack according to the sixth embodiment of this invention.

## DESCRIPTION OF THE PREFERRED EMBODIMENTS

Referring to FIG. 1 of the drawings, a fuel cell system comprises a fuel cell stack 50 in which a plurality of polymer electrolyte fuel cells 1 is stacked. The fuel cell 1 comprises an anode 2 and a cathode 3.

Although only a single fuel cell 1 is illustrated in the figure, the actual fuel cell system comprise a fuel cell stack 50 comprising a large number of stacked fuel cells 1. The fuel cell 1 in the figure should be understood as one of the fuel cells 1 constituting the fuel cell stack 50.

Hydrogen is supplied to the anode 2 of each fuel cell 1 as fuel gas having been humidified by a first humidifier 4. Air is supplied to the cathode 3 of each fuel cell 1 as an oxidant gas having been humidified by a second humidifier 5. The state of humidification of the humidifiers 4 and 5 is controlled by a controller 7 through output signals. A bubbler or steamer may be used as the humidifiers 4, 5 having such a function.

In this embodiment, the hydrogen and oxygen correspond to the moisture-adjusted gas in the claims, and the humidifier 4(5) corresponds to the moisture-adjusted gas generating mechanism in the claims.

The controller 7 is constituted by a microcomputer comprising a central processing unit (CPU), read-only memory (ROM), random access memory (RAM), and an input / output interface (I / O interface). The controller may be constituted by a plurality of microcomputers.

The controller 7 controls the state of humidification of the humidifiers 4 and 5 based on the temperature of the fuel cell 1. For this purpose, the detected temperature of a temperature sensor 6 which detects the temperature of the fuel cell stack 50 is input into the controller 7 as a signal.

The temperature sensor 6 is provided in a specific location in the fuel cell stack 50 so as to detect a representative value for the temperature of the fuel cells 1 constituting the fuel cell stack 50,

When the temperature of the fuel cell system falls below freezing point following cessation of an operation of the fuel cell stack 50, the accumulated water inside the fuel cell 1 freezes, and as a result reactant gas is hindered from reaching the electrodes upon restart. If the moisture inside the fuel cell 1 is completely removed when the fuel cell system is inoperative in order to prevent freezing of the moisture inside the fuel cell 1, great electrical resistance in the dried electrolyte membrane becomes a hindrance to a power generation reaction when the fuel cell system is restarted.

In this invention, moisture-adjusted gas of an appropriate humidity is supplied to the fuel cell 1 following the cessation of operations in the fuel cell system, thereby removing condensed water inside the fuel cell 1 while keeping the fuel cell 1 in a predetermined wet condition. Here, the hydrogen and air used in the power generation reaction are also used as the moisture-adjusted gas.

Following this processing, fuel cell 1, when restarting at a low temperature below freezing point, does not suffer a blockage of gas supply due to frozen moisture while the electrolyte membrane 10 does not dry out excessively. Hence the fuel cell system can be restarted smoothly even in a low-temperature environment of less than zero degrees centigrade.

The humidifier 4 is provided to humidify the hydrogen that is supplied to the anode 2. The humidifier 5 is provided to humidify the air that is supplied to the cathode 3. The humidifiers 4, 5 perform humidification of the hydrogen and air while the fuel cell 1 generates power and after power generation is halted.

Next, referring to FIGs. 2A and 2B, the constitution of the fuel cell 1 will be described. The fuel cell system performs power generation using a fuel cell stack 50 which is constituted by a plurality of the fuel cells 1 stacked in series.

The fuel cell 1 comprises a membrane electrolyte assembly (MEA) 13, a hydrogen passage 11, and an air passage 12.

The MEA 13 is an integrated body comprising the anode 2 and cathode 3 on each side of the electrolyte membrane 10. The anode 2 comprises a catalyst portion 2a which contacts the electrolyte membrane 10, and a gas diffusion layer 2b which faces the hydrogen passage 11. The cathode 3 comprises a catalyst portion 3a which contacts the electrolyte membrane 10, and a gas diffusion layer 3b which faces the air passage 12. The catalyst portions 2a and 3a are constituted by a carbon-supported platinum catalyst.

The hydrogen passage 11 and air passage 12 are formed in the interior of a separator 14 which surrounds the MEA 13.

During power generation in the fuel cell 1, the humidifier 4 supplies humidified hydrogen to the hydrogen passage 11, and the humidifier 5 supplies humidified air to the air passage 12. The hydrogen in the hydrogen passage 11 diffuses into the catalyst portion 2a through the gas diffusion layer 2b, whereupon an electrochemical reaction illustrated in the following equation is produced by means of the platinum catalyst.

$$H_2 \rightarrow 2H^+ + 2e^-$$

A proton $H^+$ produced as a result of this reaction passes through the electrolyte membrane 10 to reach the cathode 3. An electron $e^-$ passes through an electrical circuit which is electrically connected to the anode 2 and cathode 3 to reach the catalyst portion 3b of the cathode 3, whereby driving an electrical load in the electrical circuit.

Since the proton $H^+$ passes through the electrolyte membrane 10 in a hydrated state, the electrolyte membrane 10 must be in a wet condition.

In the cathode 3, the oxygen in the air supplied from the air passage 12 diffuses into the catalyst portion 3a through the gas diffusion layer 3b. In the catalyst portion 3a, an electrochemical reaction illustrated in the following equation is produced by means of the platinum catalyst.

$$\frac{1}{2}O_2 + 2H^+ + 2e^- \rightarrow H_2O$$

As a result, water is generated in the catalyst portion 3a.

As shown in FIG. 2A, during power generation a wet condition is maintained at all times in the fuel cell 1, including the electrolyte membrane 10, as a result of the supply of humidified air and hydrogen as well as the generation of water in the cathode 3.

However, if a similar wet condition is maintained after power generation has been halted in the fuel cell 1, the water generated in the cathode 3 freezes in the gas diffusion layer 3b and air passage 12 in a low temperature environment below freezing point. Such freezing makes it difficult for oxygen to reach the catalyst portion 3a when the fuel cell 1 is restarted.

Likewise in the anode 2, during power generation in the fuel cell 1 the moisture content of the humidified hydrogen condenses and remains in the gas diffusion layer 2b and hydrogen passage 11. In a low temperature environment below freezing point, this remaining moisture freezes after power generation in the fuel cell 1 is halted. As a result of this freezing, it becomes difficult for hydrogen to reach the catalyst portion 2a when the fuel cell 1 is restarted

In this invention, appropriately humidified reactant gas is produced by controlling the humidifiers 4 and 5, and this reactant gas is supplied to the fuel cell 1 after power generation is halted. As shown in FIG. 2B, appropriately humidified reactant gas indicates reactant gas in a wet condition according to which the moisture content in the reactant gas and the moisture inside the electrolyte membrane 10 enter a state of equilibrium, and the electrolyte membrane 10 can be maintained in a sufficiently wet condition. By supplying appropriately humidified reactant gas to the anode 2 and cathode 3 in this manner, condensed water in the hydrogen passage 11, air passage 12, gas diffusion layer 2b, and gas diffusion layer 3b can be removed while preventing the moisture of the electrolyte membrane 10 from escaping.

By applying this processing to the fuel cell 1 after power generation is halted, reactant gas reaches the catalyst portion 2a and catalyst portion 3a smoothly even when the fuel cell 1 is restarted from below freezing point. Drying of the electrolyte membrane 10 can also be prevented, and hence the fuel cell 1 can be restarted in a short period of time.

Next, referring to FIG. 3, a moisture-adjusted gas supply routine which is executed by the controller 7 in order to realize the above control will be described. This routine is executed only once every time power generation in the fuel cell 1 is halted.

First, in a step S1, the controller 7 reads the temperature of the fuel cell stack 50 detected by the temperature sensor 6.

Next, in a step S2, the controller 7 sets a target humidity for the reactant gas based on the temperature of the fuel cell stack 50 such that the moisture content of the electrolyte membrane 10 and the wet condition of the reactant gas supplied around the electrolyte membrane 10 enter a state of equilibrium. The wetness of the electrolyte membrane 10 when in a state of equilibrium is lower than the humidity of the electrolyte membrane 10 when the fuel cell 1 is generating power. To realize this wetness, the humidity of the reactant gas is set such that the vapor pressure of the reactant gas takes a value that is lower than the saturated vapor pressure by a fixed pressure. The saturated vapor pressure rises as the temperature increases, and hence the target reactant gas humidity is also characterized in rising as the temperature increases. A map having this characteristic is stored in advance in the memory (ROM) of the controller 7, and in the step S2 the controller 7 sets the target reactant gas humidity on the basis of the temperature of the fuel cell stack 50 by referring to this map. The state of humidification of the humidifier 4(5) is then controlled in order to realize this target humidity.

In a case in which moisture in the hydrogen passage 11 and the gas diffusion layer 2b of the anode 2 is to be removed, the reactant gas subject to humidification is hydrogen. If moisture in the air passage 12 and the gas diffusion layer 3b of the cathode 3 is to be removed, then the subject reactant gas is air. If moisture is to be removed from both of the passages 11, 12 and gas diffusion layers 2b, 3b, both hydrogen and air are subject to humidification.

Next, in a step S3, the controller 7 operates the humidifier 4(5) to begin supplying the reactant gas, which has been humidified to the target humidity, to the fuel cell 1.l

Next, in a step S4, the controller 7 determines whether or not the time elapsed from the beginning of reactant gas supply has reached a predetermined length of time. The controller 7 waits for the elapsed time to reach the predetermined length of time, and when the elapsed time reaches the predetermined length of time, the controller 7 performs the processing of a following step S5. While waiting, reactant gas humidified to the predetermined humidity continues to be supplied to each of the fuel cell 1. The elapsed time is set to three minutes, for example.

In the step S5, the controller 7 halts the supply of reactant gas to each of the fuel cell 1 and humidification by the humidifier 4(5). Following the processing of the step S5, the controller 7 ends the routine. The fuel cell stack 50 is then left as it is until restarting is performed.

Next, referring to a Table 1, the results of an experiment conducted by the inventors regarding the relationship between the humidity of the reactant gas and the restarting capability of a fuel cell 1 will be described. The inventors supplied reactant gas at a certain humidity for a fixed period of time with power generation in the fuel cell 1 halted. The fuel cell 1 was then left in an environment of minus twenty degrees centigrade, whereupon air and hydrogen were supplied to the fuel cell 1 to restart the fuel cell.

Table-1

| Relative humidity of reaction gas | Power generation capability at -20°C or lower |
|---|---|
| 0% | not capable |
| 15% | capable |
| 40% | ditto |
| 60% | ditto |
| 95% | ditto |
| 100% | not capable |

As shown in Table 1, when reactant gas within a range of 15-95% humidity is supplied to the fuel cell 1 in a state of halted power generation, the fuel cell 1 can be restarted normally at minus twenty degrees centigrade. However, when reactant gas outside of this humidity range was supplied, the fuel cell 1 could not be restarted normally at minus twenty degrees centigrade. From the results of this experiment as described above, it is desirable that the humidity of the reactant gas that is supplied to the fuel cell 1 in a state of halted power generation be within a range of 15-95%.

When the humidity of the reactant gas is greater than 95%, it becomes difficult to remove moisture from the passage 11(12) and gas diffusion layer 2b(3b). Also, water vapor contained in the reactant gas may condense and remain in the passage 11(12) or gas diffusion layer 2b(3b) as water droplets. If, on the other hand, the humidity of the reactant gas is lower than 15%, the electrolyte membrane 10 dries out, causing an increase in internal resistance which makes restarting the fuel cell 1 difficult.

When reactant gas within a humidity range of 15-95% is supplied to the fuel cells 1 following cessation of power generation, the moisture content of the electrolyte membrane 10 and the moisture content of the reactant gas become balanced, enabling condensed water inside the passage 11(12) and gas diffusion layer 2b(3b) 11 to be removed while maintaining the wet condition of the electrolyte membrane 10. As a result, when the fuel cell 1 is restarted, reactant gas is supplied rapidly to the catalyst portion 2a(3a) through the gas diffusion layer 2b(3b)11, whereby the fuel cell 1 is restarted smoothly and the time required for the fuel cell 1 to become capable of power generation is shortened. It is also easy to maintain the wet condition of the electrolyte membrane 10 during restarting.

This device humidifies the reactant gas that is supplied to the fuel cell stack 50 following cessation of power generation using the humidifier 4(5), which humidifies the reactant gas during power generation in the fuel cell stack 50. Hence no specialist device is required for humidifying the reactant gas following the cessation of power generation, and thus the interior of the MEA 13 can be set in a uniformly wet condition while retaining a simple constitution of the fuel cell system.

Further, the humidity of the reactant gas is determined according to the temperature of the fuel cell stack 50, and hence the amount of moisture contained in the electrolyte membrane 10 can be maintained at a fixed level regardless of the temperature of the fuel cell stack 50.

Next, referring to FIGs. 4 to 6, a second embodiment of this invention will be described.

Referring to FIG. 4, the fuel cell system according to this embodiment comprises a humidity sensor 8 for detecting the humidity of the fuel cell stack 50 that is considered to be a representative value for the humidity of the fuel cells 1. The constitutions of the other hardware relating to the fuel cell system are identical to those of the first embodiment.

In the first embodiment, the controller 7 supplied humidified reactant gas to each of the fuel cells 1 over a predetermined period of time following the cessation of power generation in the fuel cell stack 50. In this embodiment, however, the controller 7 continues to supply the humidified reactant gas, regardless of the amount of time elapsed from the beginning of humidified reactant gas supply, until the temperature and humidity of the fuel cell stack 50 reach a wet condition of a predetermined equilibrium. Further, the state of humidification of the reactant gas is caused to vary dynamically in accordance with variations in the temperature and humidity of the fuel cell stack 50.

Referring to FIG. 5, first, in a step S11, the controller 7 reads the humidity inside the fuel cell stack 50 detected by the humidity sensor 8, and the temperature of the fuel cell 1 detected by the temperature sensor 6.

In steps S12-S15, the controller 7 feedback-controls the state of humidification of the humidifier 4(5) on the basis of the humidity and temperature of the fuel cells 1.

First, in the step S12, a target humidity for the reactant gas is set. When the processing of the step S12 is executed first in the feedback loop of the steps S12-S15, the controller 7 sets an initial value of the target humidity by referring to a map which is stored in advance in the memory (ROM) on the basis of the humidity and temperature of the fuel cell 1 read in the step S11. The difference between this map and the map used in the step S2 of the first embodiment is that the humidity of the fuel cells 1 is added as a parameter. In addition to the relationship between the target humidity of the reactant gas and the temperature of the fuel cells 1 defined in the map in the first embodiment, the relationship between the target humidity of the reactant gas and the humidity of the fuel cells 1 is defined. More specifically, a characteristic is set such that when the humidity of the fuel cells 1 is higher than a predetermined humidity, a smaller target humidity is applied than when the humidity of the fuel cells 1 is lower than the predetermined humidity.

In the processing of the step S12 from the second time onward in the feedback loop, the controller 7 applies a well-known feedback control method such as proportional/integral control to correct the target humidity.

Once the target humidity has been set in this manner, the controller 7 controls the state of humidification of the humidifier 4(5) so as to realize the target humidity.

Next, in the step S13, the controller 7 operates the humidifier 4(5) to supply to the fuel cells 1 reactant gas humidified to the target humidity.

Next, in the step S14, the controller 7 reads the humidity and temperature of the fuel cells 1 again in a similar manner to the step S11.

Next, in the step S15, the controller 7 determines whether or not the wet condition of the fuel cells 1 has reached the predetermined state of equilibrium from the humidity and temperature of the fuel cells 1 detected in the step S14.

This determination is made by referring to a map having the characteristic shown in FIG. 6, which is stored in advance in the memory (ROM) of the controller 7. In this map, three regions (A)(B)(C) are set in accordance with the temperature and humidity of the fuel cells 1. The region (B) is a region in which the predetermined balanced wet condition is obtained. The region (A) is a region in which the electrolyte membrane 10 is too dry, and the region (C) is a region in which condensed water remains inside the fuel cells 1. When the temperature and humidity of the fuel cells 1 are in the region (C), the controller 7 feedback-corrects the target humidity of the reactant gas in the step S12 such that the target humidity is reduced, and when the temperature and humidity of the fuel cells 1 are in the region (A), the controller 7 feedback-corrects the target humidity of the reactant gas in the step S12 such that the target humidity increases.

The controller 7 executes the processing of the steps S12-S15 repeatedly until the fuel cells 1 reaches the predetermined state of equilibrium, or in other words until the region (B) is reached.

When the fuel cell 1 reaches the predetermined state of equilibrium in the step S15, the controller 7 halts the supply of the reactant gas to the fuel cells 1 and humidification by the humidifier 4(5) in a step S16. Following the processing of the step S16, the controller 7 ends the routine. Thereafter, the fuel cell stack 50 is left as it is until restarting is performed.

It should be noted that the likelihood of condensed water remaining in the cathode 3 is extremely high immediately after power generation is halted in the fuel cells 1. It is also possible that large irregularities in humidity will occur depending on the location within a fuel cell 1.

Hence, by continuing to supply humidified reactant gas for a short amount of time even after it has been determined from the temperature and humidity of the fuel cells 1 that the wet condition of the fuel cells 1 has reached the predetermined state of equilibrium, the desired wet condition can be obtained throughout the entire fuel cells 1 with certainty.

In this embodiment, setting of the target humidity and determination of the predetermined wet condition are performed dynamically according to variation in the temperature and humidity of the fuel cells 1. Hence the wet condition of the fuel cells 1 can be controlled more accurately than the first embodiment.

Next, referring to FIGs. 7 and 8, a third embodiment of this invention will be described.

Referring to FIG. 7, the fuel cell system according to this embodiment comprises an outside air temperature sensor 9 in addition to the constitution of the fuel cell system according to the second embodiment. The constitutions of the other hardware relating to the fuel cell system are identical to those of the second embodiment.

In this embodiment, the controller 7 does not begin to supply humidified reactant gas immediately after power generation is halted in the fuel cells 1, but waits for a fixed period of time. Humidified reactant gas is supplied to the fuel cells 1 when, during this waiting period, the outside air temperature falls within a temperature region in which the fuel cells 1 are likely to freeze.

Referring to FIG. 8, first, in a step S21, the controller 7 reads the outside air temperature detected by the outside air temperature sensor 9.

Next, in a step S22, a determination is made as to whether or not the outside air temperature is within a predetermined temperature region. The predetermined temperature region is from freezing point to a higher reference temperature than freezing point. The reference temperature is set at five degrees centigrade, for example. If the outside air temperature deviates from the predetermined temperature region, the controller 7 waits for a fixed period of time in a step S30, and then repeats the processing from the step S21. The fixed period of time is set at ten minutes, for example.

The reason why humidified reactant gas is not supplied immediately to the fuel cells 1 when the outside air temperature deviates from the predetermined temperature region is as follows.

When the outside air temperature falls below freezing point, the interior of the fuel cells 1 may already be frozen and humidification by the humidifier 4(5) is difficult, and hence control of the wet condition of the fuel cells 1 is not performed. When the outside air temperature is higher than the reference temperature, on the other hand, there is considered to be no possibility of freezing even if the fuel cell stack 50 is left as is. Hence in such cases, supplying humidified reactant gas to the fuel cells 1 is postponed until the outside air temperature variations to the predetermined temperature region.

When the outside air temperature is within the predetermined temperature region in the step S22, the controller 7 reads the humidity inside the fuel cells 1 detected by the humidity sensor 8 and the temperature of the fuel cells 1 detected by the temperature sensor 6 in a step S23.

Next, in a step S24, the controller 7 determines whether or not the wet condition of the fuel cells 1 has reached the predetermined state of equilibrium from the humidity and temperature of the fuel cells 1. This determination is identical to the determination of the step S15 in the second embodiment. If the fuel cells 1 have reached the predetermined state of equilibrium, the controller 7 waits for the fixed period of time in the step S30 described above, and then repeats the processing from the step S21 onward. If the fuel cells 1 have not reached the predetermined state of equilibrium, the controller 7 performs the processing of steps S25-S29, whereby humidified reactant gas is supplied to the fuel cells 1. The processing content of the steps S25-S29 is identical to the processing of the steps S12-S16 in the second embodiment.

By executing the above routine, when condensed water is produced inside the fuel cells 1, for example, the humidity inside the fuel cells 1 reaches 100% or a high humidity in the vicinity thereof. In this case, the determination result of the step S24 is negative, and hence the process for supplying humidified reactant gas from the step S25 onward is invariably executed as long as the outside air temperature is within the predetermined temperature region, whereby surplus water is removed from the interior of the fuel cells 1.

In the step S22, a determination is made in accordance with the outside air temperature as to whether or not to supply humidified reactant gas to the fuel cells 1. However, the same determination may be made according to the temperature of the fuel cells 1 detected by the temperature sensor 6 or the temperature in a specific location of the fuel cell stack 50 which serves as a representative temperature for the fuel cells 1. In this case, humidified reactant gas is not supplied to the fuel cells 1 until the heat held by the fuel cells 1 has been discharged following the cessation of power generation in the fuel cells 1, and the supply of humidified reactant gas to the fuel cells 1 is begun when the temperature of the fuel cells 1 has fallen to a predetermined temperature region. In so doing, wasteful supply of humidified reactant gas can be avoided, and the power consumption required for preventing freezing can be reduced.

Next, referring to FIG. 9, a fourth embodiment of this invention will be described.

In this embodiment, the humidity of the hydrogen that is supplied to the anode 2 and the humidity of the air that is supplied to the cathode 3 are set to different values. This embodiment may be combined with any of the first through third embodiments described above.

The inventors performed an experiment in which humidified hydrogen and humidified air were supplied to the anode 2 and cathode 3 respectively following cessation of power generation, and the humidity of the humidified hydrogen and humidity of the humidified air were set to different values. The effect produced by this difference in humidity on the possible amount of generated energy when a fuel cell 1 was restarted at minus twenty degrees centigrade was then examined. FIG. 9 shows the results of the experiment.

According to this experiment, when the wetness of the anode 2 is set higher than the wetness of the cathode 3, the possible amount of generated energy at minus twenty degrees centigrade is maximized. During power generation, the faces of the electrolyte membrane 10 which face the anode 2 are likely to dry out. Hence the wetness of the anode 2 is set to a high level in advance before the fuel cell stack 50 is left as it is. If the wetness of the cathode 3 is set to a similarly high level at this time, the probability of water accumulating inside the gas diffusion layer 3b increases, and at low temperatures this moisture freezes, obstructing air from reaching the catalyst portion 3a when the fuel cell stack 50 is restarted.

For the reasons described above, in this embodiment hydrogen of a higher humidity than the humidity of the air which is supplied to the cathode 3 is supplied to the anode 2 of the fuel cells 1 after power generation is halted. By taking this measure, the faces of the electrolyte membrane 10 which face the anode 2 can be prevented from drying out when the fuel cell stack 50 is restarted from below freezing point.

Next, referring to FIG. 10, a fifth embodiment of this invention will be described.

This embodiment relates to a method for detecting a wet condition of the fuel cells 1. In the second embodiment, the wet condition of the fuel cells 1 is detected using the humidity sensor 8, but in this embodiment, the wet condition of the fuel cells 1 is detected using a high frequency impedance meter 15 for measuring high frequency impedance between the anode 2 and cathode 3 of one of the fuel cell 1. High frequency impedance between the anode 2 and cathode 3 corresponds to electrical resistance between the anode 2 and cathode 3, and varies in accordance with the temperature and wetness of the fuel cell stack 50.

Accordingly, in this embodiment a map shown in FIG. 10 is used instead of the map of the second embodiment shown in FIG. 6. In this map, similarly to the map in FIG. 6, the wetness of the fuel cell stack 50 is divided into three regions, (A) too dry, (B) appropriate wet condition, and (C) remaining condensed water, in accordance with the temperature of the fuel cell stack 50 and the high frequency impedance between the anode 2 and cathode 3 detected by the high frequency impedance meter 15. In the drawing, the wetness of the fuel cell stack 50 decreases as the high frequency impedance increases and the temperature of the fuel cell stack 50 rises.

In the region (A), the electrolyte membrane 10 is too dry. In this state, electromotive force falls rapidly even at a slight current when a fuel cell 1 is caused to perform power generation. In the region (A), impedance, or in other words resistance, is high, and hence large voltage drops occur at even a slight current. If the resistance is 10 Ohm-square centimeters ($\Omega cm^2$), for example, the voltage drop in the MEA 13 when an electrical current of 0.1 amperes per square centimeter ($A/cm^2$) is applied equals 1 volt (V). With such a voltage drop, it is difficult to generate power in the fuel cell 1.

In the region (C), the electrolyte membrane 10 enters the excessively wet condition shown in FIG. 2A. For example, if 100% humidity reactant gas is supplied to the fuel cells 1 after power generation is halted in the fuel cells 1, the condensed water inside the fuel cells 1 cannot be removed. If the fuel cell stack 50 is left in this state, the condensed water inside the fuel cells 1 freezes when the outside air temperature falls below freezing point. As a result, reactant gas is obstructed from reaching the catalyst portion 2a(3a) when the fuel cell stack 50 is restarted.

In the region (B), condensed water is not produced in the electrolyte membrane 10, and an appropriate wet condition is maintained. Hence, even in a low temperature of minus twenty degrees centigrade, the fuel cell stack 50 can be restarted in a short period of time, and a sufficient electromotive power is exhibited directly after restarting.

Here, the high frequency impedance and wetness have the qualitative characteristics shown in FIG. 10, but the high frequency impedance between the anode 2 and cathode 3 differs according to the constitution of the MEA 13, including the thickness of the electrolyte membrane 10. Hence, specific numerical values for the boundaries of the region (B) are determined experientially using a fuel cell of an identical specification to the fuel cell 1, and a map based on the results of the experiment is stored in the memory (ROM) of the controller 7 in advance.

Similarly to the second embodiment, the controller 7 executes the moisture-adjusted gas supply routine of FIG. 5 immediately after power generation is halted in the fuel cell stack 50.

In this embodiment, the high frequency impedance detected by the high frequency impedance meter 15 is read in the steps S11 and S14 instead of the humidity of the fuel cells 1. Other processing is identical to the second embodiment.

In this embodiment, the wetness of the fuel cells 1 is detected on the basis of the high frequency impedance, or in other words the electrical resistance value, and hence wetness can be detected with good response.

Next, referring to FIGs. 11 and 12, a sixth embodiment of this invention will be described.

This embodiment relates to sensor disposition.

Referring to FIG. 11, in this embodiment a first temperature sensor 6a, a second temperature sensor 6b, a first humidity sensor 8a, and a second humidity sensor 8b are provided for detecting the temperature and humidity of the fuel cell stack 50 comprising a large number of stacked fuel cells 1.

The hydrogen passage 11 of each of the stacked fuel cells 1 in the fuel cell stack 50 is connected in parallel to a hydrogen manifold which penetrates through the fuel cell stacks 1 constituting the fuel cell stack 50. Similarly, the air passage 12 of each fuel cell 1 is connected in parallel to an air manifold which also penetrates the fuel cells 1 constituting the fuel cell stack 50. An inlet 51a of the hydrogen manifold and an inlet 51b of the air manifold are formed on one end of the fuel cell stack 50. An outlet 52a of the hydrogen manifold and an outlet 52b of the air manifold are formed on another end of the fuel cell stack 50.

Hydrogen from the humidifier 4 is supplied to the inlet 51a of the hydrogen manifold, and air from the humidifier 5 is supplied to the inlet 51b of the air manifold.

In the fuel cell stack 50 constituted in this manner, the temperature sensor 6a and humidity sensor 8a are provided in the upstream portion of the fuel cell stack 50 in the vicinity of the inlets 51a and 51b. The temperature sensor 6b and humidity sensor 8b are provided in the downstream portion of the fuel cell stack 50 in the vicinity of the outlets 52a and 52b.

Referring to FIG. 12, immediately after power generation is halted in the fuel cell stack 50, the fuel cells 1 are in a uniform wet condition. Here, when humidity-controlled reactant gas is supplied to the fuel cell stack 50 using a method according to any of the aforementioned embodiments, the wetness of the fuel cell 1 decreases with time. At this time, the wetness of a fuel cell la positioned in the upstream portion of the fuel cell stack 50 decreases more quickly than the wetness of a fuel cell 1b positioned in the downstream portion of the fuel cell stack 50. Hence, the time required for the moisture content of the electrolyte membrane 10 and the wet condition of the reactant gas supplied around the electrolyte membrane 10 to reach a state of equilibrium is shorter in the upstream portion fuel cell la than the downstream portion fuel cell 1b. Likewise regarding the temperatures detected by the temperature sensor 6a and temperature sensor 6b, decreases are more rapid in the upstream portion.

In each of the second, third, and fifth embodiments, the target humidity of the reactant gas is caused to vary dynamically according to variation in the temperature and humidity of the fuel cell 1.

In this embodiment, if the target humidity of the reactant gas is determined on the basis of the humidity detected by the downstream portion humidity sensor 8b and the temperature detected by the downstream portion temperature sensor 6b in the step S12 or S25, the humidity of the reactant gas will become too dry in relation to the wetness of the upstream portion fuel cell 1, and as a result the electrolyte membrane 10 of the upstream portion fuel cell 1 may dry out.

Further, if the determination in the step S15 or S28 as to whether or not the wet condition of the fuel cell 1 has reached the predetermined state of equilibrium is made on the basis of the humidity detected by the upstream portion humidity sensor 8a and the temperature detected by the upstream portion temperature sensor 6a, it may be erroneously determined that the predetermined state of equilibrium has been reached before the wet condition of the downstream portion fuel cell 1b reaches the predetermined state of equilibrium.

Conversely, if the target humidity of the reactant gas is determined on the basis of the humidity detected by the upstream portion humidity sensor 8a, and the determination as to whether or not the predetermined state of equilibrium has been reached is made on the basis of the humidity detected by the downstream portion humidity sensor 8b, the wet condition of the large number of fuel cells 1 can be controlled accurately using few sensors.

This sensor disposal in a fuel cell system which uses a fuel cell stack comprising a large number of the fuel cells 1 may be combined with any control algorithm of the first through fifth embodiments.

In each of the embodiments described above, humidified reactant gas is used to cause the wetness of the fuel cell 1 after power generation is halted to reach a predetermined state of equilibrium. Theoretically, it is possible to cause the wetness of the fuel cell 1 to reach a state of equilibrium using non-humidified dry reactant gas, as in the prior art. In this case, however, the state of equilibrium is reached only momentarily during a process in which the wetness of the fuel cells 1 moves from an excessively high level to an excessively low level. Hence it is difficult to determine the timing at which reactant gas supply should be halted, and the wetness of the fuel cells 1 cannot be controlled with precision. Further, in a fuel cell stack comprising a large number of stacked fuel cells 1, all of the fuel cells 1 do not necessarily reach the state of equilibrium simultaneously, and thus when dry reactant gas is supplied to the fuel cell stack, it is impossible for all of the fuel cells 1 to reach the state of equilibrium. By using reactant gas which is adjusted to a target humidity on the basis of the temperature and/or humidity of the fuel cells 1, as in this invention, all of the fuel cells 1 can be caused to reach the state of equilibrium.

Although the invention has been described above by reference to certain embodiments of the invention, the invention is not limited to the embodiments described above. Modifications and variations of the embodiments described above will occur to those skilled in the art, within the scope of claims.

For example, in each of the embodiments described above, the reactant gas used in power generation is humidified and then supplied to the fuel cells 1 after power generation is halted. However, the moisture-adjusted gas for adjusting the wetness of the fuel cells 1 after power generation is halted does not necessarily have to be reactant gas. For example, the humidity of an inert gas such as nitrogen may be adjusted and this gas may be supplied to the anode 2 and cathode 3 of the fuel cells 1 instead of reactant gas after power generation is halted.

As long as the humidifiers 4 and 5 are capable of humidifying gas in response to a signal from the controller 7, any type of humidifier may be used.

INDUSTRIAL FIELD OF APPLICATION

As described above, in this invention appropriately humidified moisture-adjusted gas is supplied to fuel cells after the fuel cells stop generating power, and thus condensed water inside the fuel cells is removed while maintaining the electrolyte membrane in a wet condition. Hence when the inoperative fuel cells are to be restarted from below freezing point, reactant gas is not obstructed from reaching the anode and cathode by frozen condensed water, and consequently the fuel cells can begin to generate power quickly. Further, since the electrolyte membrane is maintained in a wet condition, the fuel cells exhibit high power generation efficiency immediately upon the commencement of power generation. Accordingly, this invention has a particularly favorable effect when applied to a fuel cell system for installment in a vehicle which is used in an environment with severe temperature variations.

The embodiments of this invention in which an exclusive property or privilege is claimed are defined as follows:

## Claims

**1.** A fuel cell system which performs power generation by means of an electrochemical reaction of a fuel gas and an oxidant gas, comprising:

fuel cells (1) each of which comprises an anode (2) which contacts the fuel gas, a cathode (3) which contacts the oxidant gas, and an electrolyte membrane (10) held between the anode (2) and cathode (3);
a moisture-adjusted gas generating mechanism (4, 5) which generates moisture-adjusted gas at an arbitrary humidity; and

a sensor (6) which detects a temperature of the fuel cells (1);
**characterized by**
a programmable controller (7) programmed to:

determine a target humidity based on a the temperature of the fuel cells (1) after power generation is halted (S2, S12, S25);
control the gas generating mechanism (4, 5) such that the humidity of the moisture-adjusted gas matches the target humidity (S2, S12, S25); and
control the moisture-adjusted gas generating mechanism (4, 5) to supply the moisture-adjusted gas adjusted to the target humidity to at least one of the anode (2) and cathode (3) after power generation in the fuel cells (1) is halted (S3, S13, S26).

**2.** The fuel cell system as defined in Claim 1, **characterized in that** the moisture-adjusted gas comprises one of a humidified fuel gas and a humidified oxidant gas.

**3.** The fuel cell system as defined in Claim 1 or 2, **characterized in that** the moisture-adjusted gas comprises a humidified fuel gas and a humidified oxidant gas, the gas generating mechanism (4, 5) comprises a first humidifier (4) which humidifies the fuel gas to generate the humidified fuel gas and a second humidifier (5) which humidifies the oxidant gas to generate the humidified oxidant gas; and the controller (7) is further programmed to control the moisture-adjusted gas generating mechanism (4, 5) such that after power generation in the fuel cells (1) is halted, fuel gas adjusted to the target humidity is supplied to the anode (2) by the first humidifier (4), and oxidant gas adjusted to the target humidity is supplied to the cathode (3) by the second humidifier (5) (S3, S 16, S26).

**4.** The fuel cell system as defined in any one of Claims 1 through 3, **characterized in that** the controller (7) is further programmed to set the target humidity higher as the temperature of the fuel cells (1) increases (S2, S 12, S25).

**5.** The fuel cell system as defined in any one of Claims 1 through 4, **characterized in that** the controller (7) is further programmed to control the moisture-adjusted gas generating mechanism (4, 5) such that the supply of moisture-adjusted gas is halted when a predetermined period of time elapses following the commencement of moisture-adjusted gas supply by the gas generating mechanism (4, 5).

**6.** The fuel cell system as defined in any one of Claims 1 through 5, **characterized in that** the fuel cell system further comprises a sensor (8, 15) which detects a wet condition of the fuel cells (1), and the controller (7) is further programmed to set the target humidity higher when the wet condition of the fuel cells (1) is drier than a predetermined wet region than when the wet condition of the fuel cells (1) is wetter than the predetermined wet region (S12, S25).

**7.** The fuel cell system as defined in Claim 6, **characterized in that** the controller (7) is further programmed to modify the target humidity according to the wet condition of the fuel cells (1), which varies during the supply of moisture-adjusted gas by the gas generating mechanism (4, 5), and to control the gas generating mechanism (4, 5) such that the humidity of the moisture-adjusted gas matches the modified target humidity (S12, S25).

**8.** The fuel cell system as defined in Claim 7, **characterized in that** the controller (7) is further programmed to control the moisture-adjusted gas generating mechanism (4, 5) such that when the temperature and the wet condition of the fuel cells (1) reach a predetermined state of equilibrium, the supply of moisture-adjusted gas is halted (S28, S29).

**9.** The fuel cell system as defined in any one of Claims 1 through 8, **characterized in that** the sensor (8, 15) which detects the wet condition of the fuel cells (1) is constituted by a sensor (15) which measures electrical resistance between the anode (2) and cathode (3).

**10.** The fuel cell system as defined in Claim 1, **characterized in that** the fuel cell system comprises a fuel cell stack (50) comprising a stacked body of a plurality of the fuel cells (1), a moisture-adjusted gas inlet (51a, 51b) for supplying the moisture-adjusted gas from the moisture-adjusted gas generating mechanism (4, 5) to each of the fuel cells (1), and a moisture-adjusted gas outlet (52a, 52b) for discharging from the fuel cell stack (50) the moisture-adjusted gas which has discharged from each of the fuel cells (1), a first sensor (8a) which detects the wet condition of the fuel cell stack (50) in the vicinity of the inlet (51a, 51b) and a second sensor (8b) which detects the wet condition of the fuel cell stack (50) in the vicinity of the outlet (52a, 52b), and the controller (7) is further programmed to set the target humidity of the moisture-adjusted gas on the basis of the wet condition of the fuel cell stack (50) in the vicinity of the inlet (51a, 51b), and to determine when to halt the supply of moisture-adjusted gas on the basis of the wet condition of the fuel cell stack (50) in the vicinity of the outlet (52a, 52b).

**11.** The fuel cell system as defined in any one of Claim 1 through Claim 10, **characterized in that** the fuel cell system further comprises a sensor (9) which detects an outside air temperature, and the controller (7) is further programmed to control the moisture-adjusted gas generating mechanism (4, 5) such that, when the outside air temperature after power generation in the fuel cells (1) is halted deviates from a predetermined temperature region, the supply of the moisture-adjusted gas is halted (S22, S30).

**12.** The fuel cell system as defined in any one of Claim 1 through Claim 11, **characterized in that** the target humidity is set between fifteen percent and ninety-five percent.

**13.** The fuel cell system as defined in any one of Claim 1 through Claim 12, **characterized in that** the moisture-adjusted gas generating mechanism (4, 5) comprises a mechanism (4) which supplies humidified moisture-adjusted gas to the anode (2) after power generation in the fuel cells (1) is halted, and a mechanism (5) which supplies humidified moisture-adjusted gas to the cathode (3) after power generation in the fuel cells (1) is halted, and the controller (7) is further programmed to set the target humidity of the moisture-adjusted gas that is supplied to the anode (2) after power generation in the fuel cells (1) is halted higher than the target humidity of the moisture-adjusted gas that is supplied to the cathode (3) after power generation in the fuel cells (1) is halted.

**14.** A moisture control method of fuel cell system which performs power generation by means of an electrochemical reaction of a fuel gas and an oxidant gas, and comprises:

fuel cells (1) each of which comprises an anode (2) which contacts the fuel gas, a cathode (3) which contacts the oxidant gas, and an electrolyte membrane (10) held between the anode (2) and cathode (3);
a moisture-adjusted gas generating mechanism (4, 5) which generates moisture-adjusted gas at an arbitrary humidity; and
a sensor (6) which detects the temperature of the fuel cells (1);
**characterized in that** the method comprises:
determining a target humidity based on a the temperature of the fuel cells (1) after power generation is halted (S2, S12, S25);
controlling the moisture-adjusted gas generating mechanism (4, 5) such that the humidity of the moisture-adjusted gas matches the target humidity (S2, S12, S25); and
controlling the moisture-adjusted gas generating mechanism (4, 5) to supply the moisture-adjusted gas adjusted to the target humidity to at least one of the anode (2) and cathode (3) after power generation in the fuel cells (1) is halted (S3, S 13, S26).

## Patentansprüche

**1.** Brennstoffzellensystem, das eine Stromerzeugung mittels einer elektrochemischen Reaktion eines Brenngases und eines Oxidansgases durchführt, umfassend:

Brennstoffzellen (1), von denen jede eine Anode (2), welche mit dem Brenngas in Kontakt steht, eine Kathode (3), welche mit dem Oxidansgas in Kontakt steht, und eine Elektrolytmembran (10), die zwischen der Anode (2) und der Kathode (3) gehalten wird, umfasst;
eine Erzeugungsvorrichtung (4, 5) für ein feuchtigkeitsangepasstes Gas, das ein feuchtigkeitsangepasstes Gas bei einem beliebigen Feuchtigkeitsgehalt erzeugt; und
einen Sensor (6), der eine Temperatur der Brennstoffzellen (1) erfasst;
**gekennzeichnet durch**
eine programmierbare Steuerung (7), die programmiert ist, um:
einen Zielfeuchtigkeitsgehalt auf der Grundlage der Temperatur der Brennstoffzellen (1) zu bestimmen, nachdem die Stromerzeugung unterbrochen wurde (S2, S12, S25);
die Gaserzeugungsvorrichtung (4, 5) so zu steuern, dass der Feuchtigkeitsgehalt des feuchtigkeitsangepassten Gases mit dem Zielfeuchtigkeitsgehalt übereinstimmt (S2, S12, S25); und
die Erzeugungsvorrichtung (4, 5) für das feuchtigkeitsangepasste Gas zu steuern, um das auf den Zielfeuchtigkeitsgehalt angepasste feuchtigkeitsangepasste Gas zur Anode (2) und/oder zur Kathode (3) zuzuführen, nachdem die Stromerzeugung in den Brennstoffzellen (1) unterbrochen wurde (S3, S13, S26).

2. Brennstoffzellensystem nach Anspruch 1, **dadurch gekennzeichnet, dass** das feuchtigkeitsangepasste Gas ein befeuchtetes Brenngas oder ein befeuchtetes Oxidansgas umfasst.

3. Brennstoffzellensystem nach Anspruch 1 oder 2, **dadurch gekennzeichnet, dass** das feuchtigkeitsangepasste Gas ein befeuchtetes Brenngas und ein befeuchtetes Oxidansgas umfasst, die Gaserzeugungsvorrichtung (4, 5) einen ersten Befeuchter (4), der das Brenngas befeuchtet, um das befeuchtete Brenngas zu erzeugen, und einen zweiten Befeuchter (5), der das Oxidansgas befeuchtet, um das befeuchtete Oxidansgas zu erzeugen, umfasst; und die Steuerung (7) ferner programmiert ist, um die Erzeugungsvorrichtung (4, 5) für das feuchtigkeitsangepasste Gas so zu steuern, dass, nachdem die Stromerzeugung in den Brennstoffzellen (1) unterbrochen wurde, das auf den Zielfeuchtigkeitsgehalt angepasste Brenngas vom ersten Befeuchter (4) zur Anode (2) zugeführt wird und das auf den Zielfeuchtigkeitsgehalt angepasste Oxidansgas vom zweiten Befeuchter (5) zur Kathode (3) zugeführt wird (S3, S16, S26).

4. Brennstoffzellensystem nach einem der Ansprüche 1 bis 3, **dadurch gekennzeichnet, dass** die Steuerung (7) ferner programmiert ist, um den Zielfeuchtigkeitsgehalt auf einen höheren Wert zu setzen, wenn die Temperatur der Brennstoffzellen (1) ansteigt (S2, S12, S25).

5. Brennstoffzellensystem nach einem der Ansprüche 1 bis 4, **dadurch gekennzeichnet, dass** die Steuerung (7) ferner programmiert ist, um die Erzeugungsvorrichtung (4, 5) für das feuchtigkeitsangepasste Gas so zu steuern, dass die Zufuhr des feuchtigkeitsangepassten Gases unterbrochen wird, wenn ein vorbestimmter Zeitraum nach dem Beginn der Zufuhr des feuchtigkeitsangepassten Gases durch die Gaserzeugungsvorrichtung (4, 5) verstrichen ist.

6. Brennstoffzellensystem nach einem der Ansprüche 1 bis 5, **dadurch gekennzeichnet, dass** das Brennstoffzellensystem ferner einen Sensor (8, 15) umfasst, der einen Nässezustand der Brennstoffzellen (1) erfasst, und die Steuerung (7) ferner programmiert ist, um den Zielfeuchtigkeitsgehalt auf einen höheren Wert zu setzen, wenn der Nässezustand der Brennstoffzellen (1) trockener als ein vorbestimmter Nässbereich ist, als wenn der Nässezustand der Brennstoffzellen (1) nässer als der vorbestimmte Nässebereich ist (S12, S25).

7. Brennstoffzellensystem nach Anspruch 6, **dadurch gekennzeichnet, dass** die Steuerung (7) ferner programmiert ist, um den Zielfeuchtigkeitsgehalt gemäß dem Nässezustand der Brennstoffzellen (1), der während der Zufuhr des feuchtigkeitsangepassten Gases durch die Gaserzeugungsvorrichtung (4, 5) variiert, zu verändern und die Gaserzeugungsvorrichtung (4, 5) so zu steuern, dass der Feuchtigkeitsgehalt des feuchtigkeitsangepassten Gases mit dem veränderten Zielfeuchtigkeitsgehalt übereinstimmt (S12, S25).

8. Brennstoffzellensystem nach Anspruch 7, **dadurch gekennzeichnet, dass** die Steuerung (7) ferner programmiert ist, um die Erzeugungsvorrichtung (4, 5) für das feuchtigkeitsangepasste Gas so zu steuern, dass, wenn die Temperatur und der Nässezustand der Brennstoffzellen (1) einen vorbestimmten Gleichgewichtszustand erreichen, die Zufuhr von feuchtigkeitsangepasstem Gas unterbrochen wird (S28, S29).

9. Brennstoffzellensystem nach einem der Ansprüche 1 bis 8, **dadurch gekennzeichnet, dass** der Sensor (8, 15), der den Nässezustand der Brennstoffzellen (1) erfasst, durch einen Sensor (15) gebildet wird, der elektrischen Widerstand zwischen der Anode (2) und der Kathode (3) misst.

10. Brennstoffzellensystem nach Anspruch 1, **dadurch gekennzeichnet, dass** das Brennstoffzellensystem umfasst: einen Brennstoffzellenstapel (50), der einen gestapelten Körper aus einer Vielzahl von Brennstoffzellen (1) umfasst, einen Einlass (51a, 51b) für das feuchtigkeitsangepasste Gas zum Zuführen des feuchtigkeitsangepassten Gases von der Erzeugungsvorrichtung (4, 5) für feuchtigkeitsangepasstes Gas zu jeder der Brennstoffzellen (1), und einen Auslass (52a, 52b) für das feuchtigkeitsangepasste Gas zum Ausgeben des feuchtigkeitsangepassten Gases, das von jeder der Brennstoffzellen (1) ausgeschieden wurde, aus dem Brennstoffzellenstapel (50), einen ersten Sensor (8a), der den Nässezustand des Brennstoffzellenstapels (50) in der Nähe des Einlasses (51a, 51b) erfasst, und einen zweiten Sensor (8b), der den Nässezustand des Brennstoffzellenstapels (50) in der Nähe des Auslasses (52a, 52b) erfasst, und die Steuerung (7) ferner programmiert ist, um den Zielfeuchtigkeitsgehalt des feuchtigkeitsangepassten Gases auf der Grundlage des Nässezustandes des Brennstoffstapels (50) in der Nähe des Einlasses (51a, 51 b) festzulegen und um auf der Grundlage des Nässezustandes des Brennstoffzellenstapels (50) in der Nähe des Auslasses (52a, 52b) zu bestimmen, wann die Zufuhr des feuchtigkeitsangepassten Gases unterbrochen wird.

11. Brennstoffzellensystem nach einem der Anspruche 1 bis 10, **dadurch gekennzeichnet, dass** das Brennstoffzellensystem ferner einen Sensor (9) umfasst, der eine Außenlufttemperatur erfasst, und die Steuerung (7) ferner programmiert ist, um die Erzeugungsvorrichtung (4, 5) für das feuchtigkeitsangepasste Gas so zu steuern, dass die Zufuhr des feuchtigkeitsangepassten Gases unterbrochen wird, wenn die Außenlufttemperatur, nachdem die Stromerzeugung in den Brennstoffzellen (1) unterbrochen wurde, von einem vorbestimmten Temperaturbereich abweicht (S22, S30).

12. Brennstoffzellensystem nach einem der Ansprüche 1 bis 11, **dadurch gekennzeichnet, dass** der Zielfeuchtigkeitsgehalt zwischen 15 Prozent und 95 Prozent festgelegt ist.

13. Brennstoffzellensystem nach einem der Ansprüche 1 bis 12, **dadurch gekennzeichnet, dass** die Erzeugungsvorrichtung (4, 5) für das feuchtigkeitsangepasste Gas eine Einrichtung (4), die befeuchtetes, feuchtigkeitsangepasstes Gas zur Anode (2) zuführt, nachdem die Stromerzeugung in den Brennstoffzellen (1) abgehalten wurde, und eine Einrichtung (5), die befeuchtetes, feuchtigkeitsangepasstes Gas zur Kathode (3) zuführt, nachdem die Stromerzeugung in den Brennstoffzellen (1) unterbrochen wurde, umfasst, und die Steuerung (7) ferner programmiert ist, um den Zielfeuchtigkeitsgehalt des feuchtigkeitsangepassten Gases, das zur Anode (2) zugeführt wird, nachdem die Stromerzeugung in den Brennstoffzellen (1) unterbrochen wurde, auf einen höheren Wert zu setzen als den Zielfeuchtigkeitsgehalt des feuchtigkeitsangepassten Gases, das zur Kathode (3) zugeführt wird, nachdem die Stromerzeugung in den Brennstoffzellen (1) unterbrochen wurde.

14. Feuchtigkeitsgehalt-Steuerungsverfahren eines Brennstoffzellensystems, das eine Stromerzeugung mittels einer elektrochemischen Reaktion eines Brenngases und eines Oxidansgases durchführt und umfasst:

    Brennstoffzellen (1), von denen jede eine Anode (2), welche mit dem Brenngas in Kontakt steht, eine Kathode (3), welche mit dem Oxidansgas in Kontakt steht, und eine Elektrolytmembran (10), die zwischen der Anode (2) und der Kathode (3) gehalten wird, umfasst;
    eine Erzeugungsvorrichtung (4, 5) für ein feuchtigkeitsangepasstes Gas, das ein feuchtigkeitsangepasstes Gas bei einem beliebigen Feuchtigkeitsgehalt erzeugt; und
    einen Sensor (6), der eine Temperatur der Brennstoffzellen (1) erfasst;
    **dadurch gekennzeichnet, dass** das Verfahren umfasst:
    Bestimmen eines Zielfeuchtigkeitsgehalts auf der Grundlage der Temperatur der Brennstoffzellen (1), nachdem die Stromerzeugung unterbrochen wurde (S2, S12, S25);
    Steuern der Erzeugungsvorrichtung (4, 5) für das feuchtigkeitsangepasste Gas, so dass der Feuchtigkeitsgehalt des feuchtigkeitsangepassten Gases mit dem Zielfeuchtigkeitsgehalt übereinstimmt (S2, S12, S25); und
    Steuern der Erzeugungsvorrichtung (4, 5) für das feuchtigkeitsangepasste Gas, um das auf den Zielfeuchtigkeitsgehalt eingestellte, feuchtigkeitsangepasste Gas zur Anode (2) und/oder zur Kathode (3) zuzuführen, nachdem die Stromerzeugung in den Brennstoffzellen (1) unterbrochen wurde (S3, S13, S26).

## Revendications

1. Système de piles à combustible qui réalise la génération de puissance au moyen d'une réaction électrochimique d'un gaz combustible et d'un gaz oxydant, comprenant :

    des piles à combustible (1) dont chacune comprend une anode (2) qui est en contact avec le gaz combustible, une cathode (3) qui est en contact avec le gaz oxydant et une membrane d'électrolyte (10) maintenue entre l'anode (2) et la cathode (3) ;
    un mécanisme de génération de gaz ajusté en humidité (4, 5) qui génère un gaz ajusté en humidité à une humidité arbitraire ; et
    un capteur (6) qui détecte une température des piles à combustible (1) ;
    **caractérisé par** :
    un contrôleur programmable (7) programmé pour :
    déterminer une humidité cible basée sur la température des piles à combustible (1) après que la génération de puissance s'est arrêtée (S2, S12, S25) ;
    commander le mécanisme de génération de gaz (4, 5) de sorte que l'humidité du gaz ajusté en humidité correspond à l'humidité cible (S2, S12, S25) ; et
    commander le mécanisme de génération de gaz ajusté en humidité (4, 5) pour alimenter le gaz ajusté en humidité, ajusté à l'humidité cible au niveau d'au moins l'une parmi l'anode (2) et la cathode (3) après que la génération de puissance dans les piles à combustible (1) s'est arrêtée (S3, S13, S26).

2. Système de piles à combustible selon la revendication 1, **caractérisé en ce que** le gaz ajusté en humidité comprend l'un parmi un gaz combustible humidifié et un gaz oxydant humidifié.

3. Système de piles à combustible selon la revendication 1 ou 2, **caractérisé en ce que** le gaz ajusté en humidité comprend un gaz combustible humidifié et un gaz oxydant humidifié, le mécanisme de génération de gaz (4, 5) comprend un premier humidificateur (4) qui humidifie le gaz combustible pour générer le gaz combustible humidifié et un second humidificateur (5) qui humidifie le gaz oxydant pour générer le gaz oxydant humidifié ; et le contrôleur (7) est en outre programmé pour commander le mécanisme de génération de gaz ajusté en humidité (4, 5) de sorte qu'après que la génération de puissance dans les piles à combustible (1) s'est arrêtée, le gaz combustible ajusté par rapport à l'humidité cible est alimenté à l'anode (2) par le premier humidificateur (4), et le gaz oxydant ajusté par rapport à l'humidité cible est alimenté à la cathode (3) par le second humidificateur (5) (S3, S16, S26).

4. Système de piles à combustible selon l'une quelconque des revendications 1 à 3, **caractérisé en ce que** le contrôleur (7) est en outre programmé pour que l'humidité cible soit plus importante au fur et à mesure que la température des piles à combustible (1) augmente (S2, S12, S25).

5. Système de piles à combustible selon l'une quelconque des revendications 1 à 4, **caractérisé en ce que** le contrôleur (7) est en outre programmé pour commander le mécanisme de génération de gaz ajusté en humidité (4, 5) de sorte que l'alimentation du gaz ajusté en humidité est arrêtée lorsqu'une période prédéterminée de temps s'est écoulée suite au commencement de l'alimentation de gaz ajusté en humidité par le mécanisme de génération de gaz (4, 5).

6. Système de piles à combustible selon l'une quelconque des revendications 1 à 5, **caractérisé en ce que** le système de pile à combustible comprend en outre un capteur (8, 15) qui détecte une condition humide des piles à combustible (1), et le contrôleur (7) est en outre programmé pour que l'humidité cible soit plus importante lorsque la condition humide des piles à combustible (1) est plus sèche qu'une région mouillée prédéterminée que lorsque la condition humide des piles à combustible (1) est plus mouillée que la région mouillée prédéterminée (S12, S25).

7. Système de piles à combustible selon la revendication 6, **caractérisé en ce que** le contrôleur (7) est en outre programmé pour modifier l'humidité cible selon la condition humide des piles à combustible (1) qui varie pendant l'alimentation du gaz ajusté en humidité par le mécanisme de génération de gaz (4, 5) et pour contrôler le mécanisme de génération de gaz (4, 5) de sorte que l'humidité du gaz ajusté en température correspond à l'humidité cible modifiée (S12, S25).

8. Système de piles à combustible selon la revendication 7, **caractérisé en ce que** le contrôleur (7) est en outre programmé pour commander le mécanisme de génération de gaz ajusté en humidité (4, 5) de sorte que lorsque la température et la condition humide des piles à combustible (1) atteignent un état prédéterminé d'équilibre, l'alimentation du gaz ajusté en humidité est arrêtée (S28, S29).

9. Système de piles à combustible selon l'une quelconque des revendications 1 à 8, **caractérisé en ce que** le capteur (8, 15) qui détecte la condition humide des piles à combustible (1) est constitué par un capteur (15) qui mesure la résistance électrique entre l'anode (2) et la cathode (3).

10. Système de piles à combustible selon la revendication 1, **caractérisé en ce que** le système de pile à combustible comprend un empilement de piles à combustible (50) comprenant un corps empilé d'une pluralité de piles à combustible (1), une entrée de gaz ajusté en humidité (51a, 51 b) pour alimenter le gaz ajusté en humidité du mécanisme de génération de gaz ajusté en humidité (4, 5) à chacune des piles à combustible (1), et une sortie de gaz ajusté en humidité (52a, 52b) pour décharger de l'empilement de piles à combustible (50) le gaz ajusté en humidité qui a été déchargé à partir de chacune des piles à combustible (1), un premier capteur (8a) qui détecte la condition humide de l'empilement de piles à combustible (50) à proximité de l'entrée (51 a, 51b) et un second capteur (8b) qui détecte la condition humide de l'empilement de piles à combustible (50) à proximité de la sortie (52a, 52b) et le contrôleur (7) est en outre programmé pour régler l'humidité cible du gaz ajusté en humidité en fonction de la condition humide de l'empilement de piles à combustible (50) à proximité de l'entrée (51a, 51b) et pour déterminer le moment où il faut arrêter l'alimentation du gaz ajusté en humidité en fonction de la condition humide de l'empilement de piles à combustible (50) à proximité de la sortie (52a, 52b).

11. Système de piles à combustible selon l'une quelconque des revendications 1 à 10, **caractérisé en ce que** le système de piles à combustible comprend en outre un capteur (9) qui détecte une température d'air extérieur, et le contrôleur (7) est en outre programmé pour commander le mécanisme de génération de gaz ajusté en humidité (4, 5) de sorte que, lorsque la température de l'air extérieur après que la génération de puissance dans les piles à combustible (1) a été arrêtée, dévie d'une région de température prédéterminée, l'alimentation du gaz ajusté en humidité est arrêtée (S22, S30).

**12.** Système de piles à combustible selon l'une quelconque des revendications 1 à 11, **caractérisé en ce que** l'humidité cible est comprise entre quinze pour cent et quatre-vingt quinze pour cent.

**13.** Système de piles à combustible selon l'une quelconque des revendications 1 à 12, **caractérisé en ce que** le mécanisme de génération de gaz ajusté en humidité (4, 5) comprend un mécanisme (4) qui alimente le gaz ajusté en humidité humidifié à l'anode (2) après que la génération de puissance dans les piles à combustible (1) a été arrêtée, et un mécanisme (5) qui alimente un gaz ajusté en humidité humidifié à la cathode (3) après que la génération de puissance dans les piles à combustible (1) a été arrêtée, et le contrôleur (7) est en outre programmé pour déterminer que l'humidité cible du gaz ajusté en humidité qui est alimenté à l'anode (2) après que la génération de puissance dans les piles à combustible (1) a été arrêtée, est plus importante que l'humidité cible du gaz ajusté en humidité qui est alimenté à la cathode (3) après que la génération de puissance dans les piles à combustible (1) a été arrêtée.

**14.** Procédé de contrôle d'humidité du système de pile à combustible qui réalise la génération de puissance au moyen d'une réaction électrochimique d'un gaz combustible et d'un gaz oxydant, et comprend :

des piles à combustible (1) dont chacune comprend une anode (2) qui est en contact avec le gaz combustible, une cathode (3) qui est en contact avec le gaz oxydant et une membrane d'électrolyte (10) maintenue entre l'anode (2) et la cathode (3) ;
un mécanisme de génération de gaz ajusté en humidité (4, 5) qui génère un gaz ajusté en humidité selon une humidité arbitraire ; et
un capteur (6) qui détecte la température des piles à combustible (1) ;
**caractérisé en ce que** le procédé comprend les étapes consistant à :
déterminer une humidité cible en fonction de la température des piles à combustible (1) après que la génération de puissance a été arrêtée (S2, S12, S25);
commander le mécanisme de génération de gaz ajusté en humidité (4, 5) de sorte que l'humidité du gaz ajusté en humidité correspond à l'humidité cible (S2, S12, S25) ; et
commander le mécanisme de génération de gaz ajusté en humidité (4, 5) pour alimenter le gaz ajusté en humidité ajusté à l'humidité cible à au moins l'une parmi l'anode (2) et la cathode (3) après que la génération de puissance dans les piles à combustible (1) a été arrêtée (S3, S13, S26).

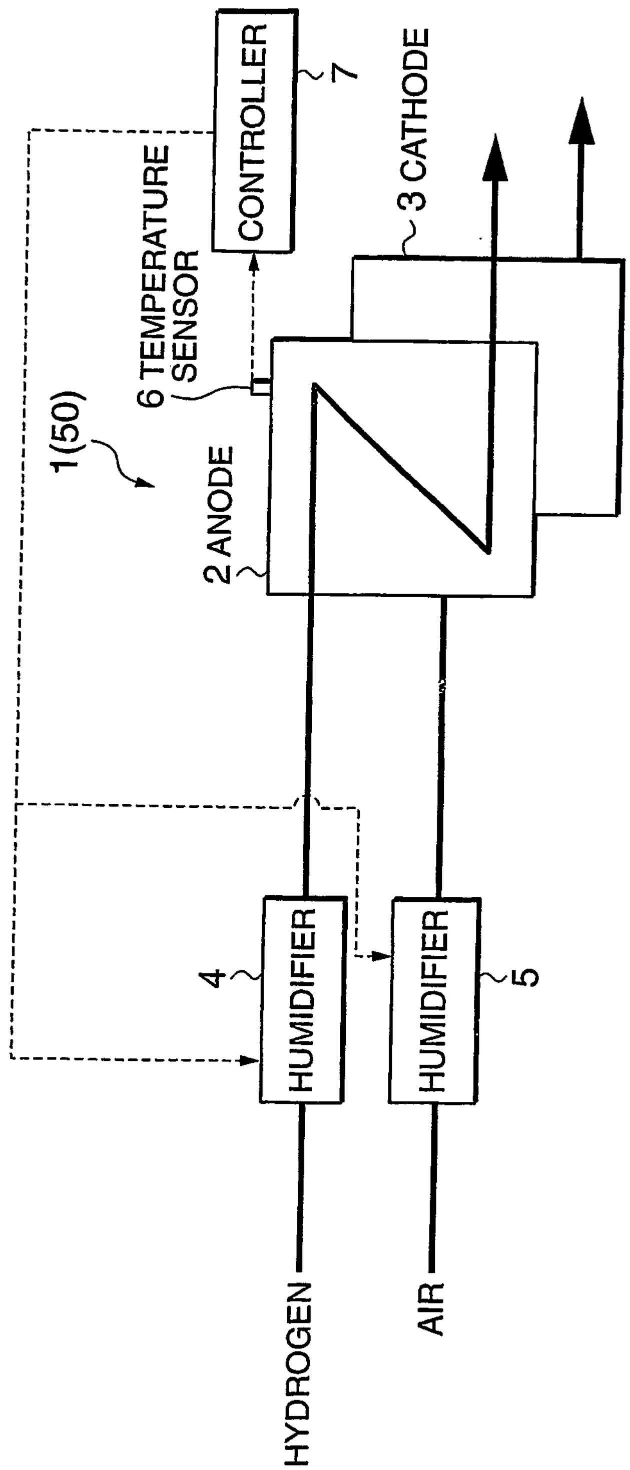
CONTROLLER
7
6 TEMPERATURE SENSOR
3 CATHODE
1(50)
2 ANODE
4
HUMIDIFIER
HUMIDIFIER
5
HYDROGEN
AIR

FIG.1

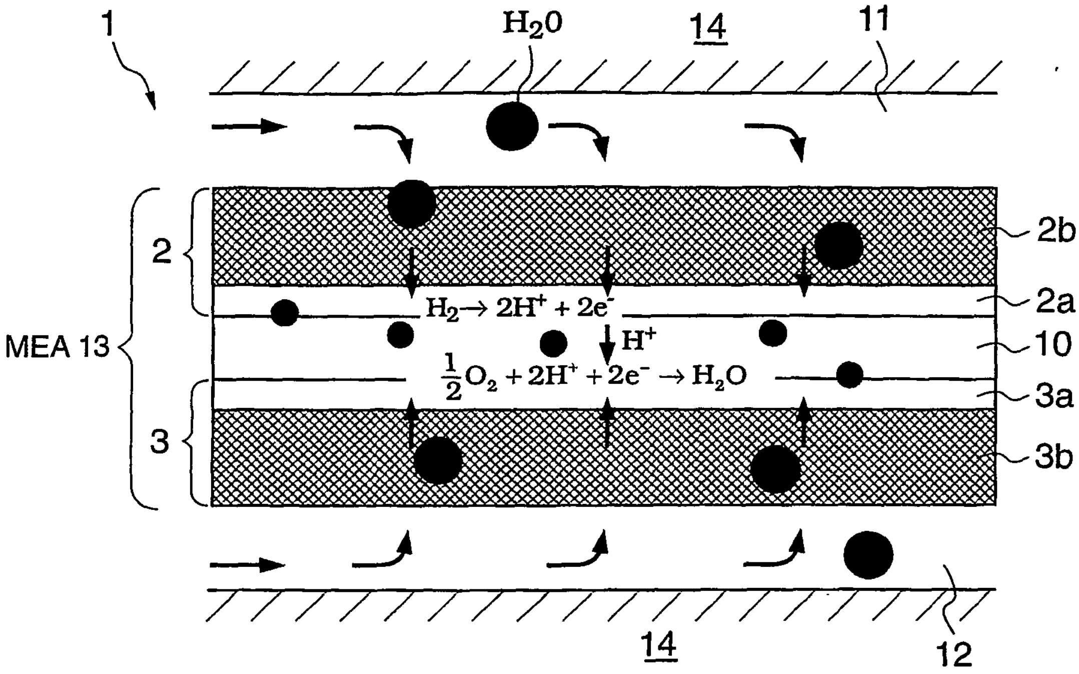
1
$H_2O$
14
11
2b
2
2a
$H_2 \rightarrow 2H^+ + 2e^-$
MEA 13
$H^+$
10
$\frac{1}{2}O_2 + 2H^+ + 2e^- \rightarrow H_2O$
3a
3
3b
14
12

FIG.2A

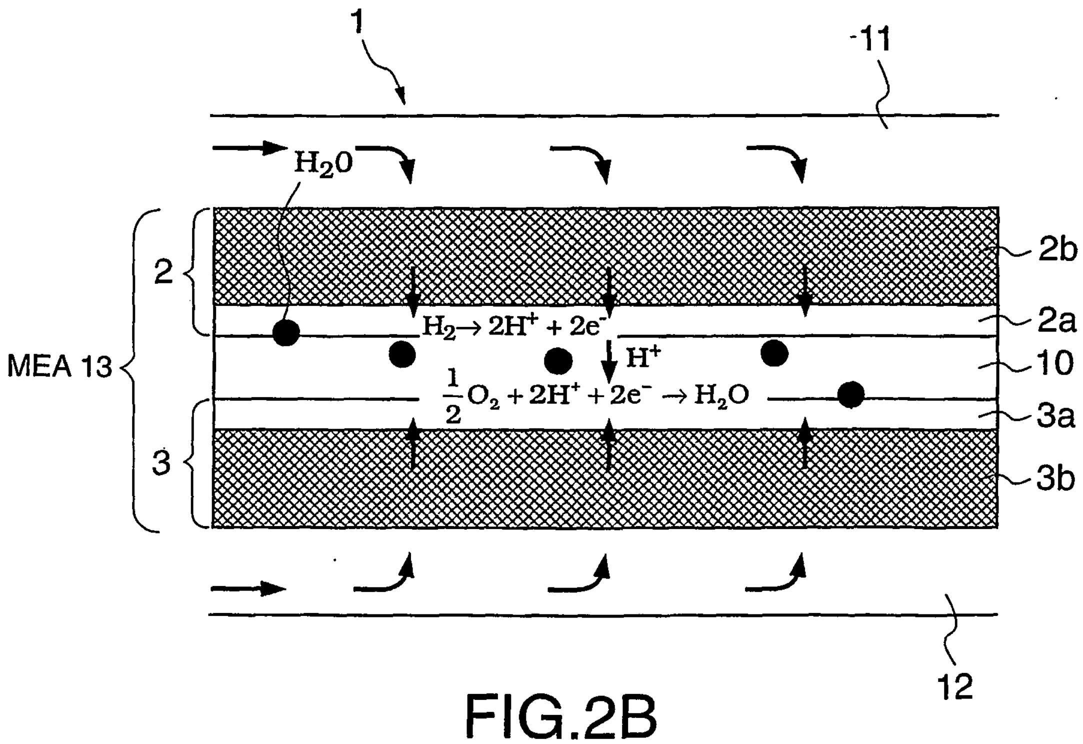
1
11
$H_2O$
2b
2
2a
$H_2 \rightarrow 2H^+ + 2e^-$
MEA 13
$H^+$
10
$\frac{1}{2}O_2 + 2H^+ + 2e^- \rightarrow H_2O$
3a
3
3b
12

FIG.2B

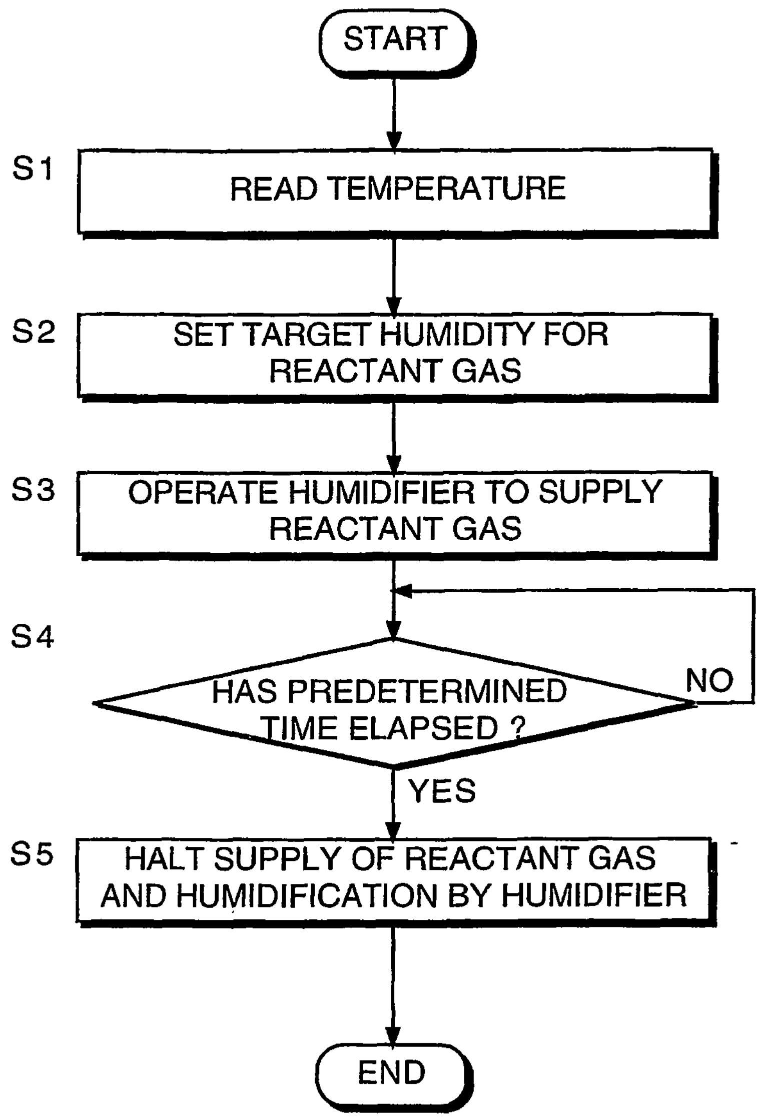
START
S1
READ TEMPERATURE
S2
SET TARGET HUMIDITY FOR REACTANT GAS
S3
OPERATE HUMIDIFIER TO SUPPLY REACTANT GAS
S4
HAS PREDETERMINED TIME ELAPSED ?
NO
YES
S5
HALT SUPPLY OF REACTANT GAS AND HUMIDIFICATION BY HUMIDIFIER
END

FIG. 3

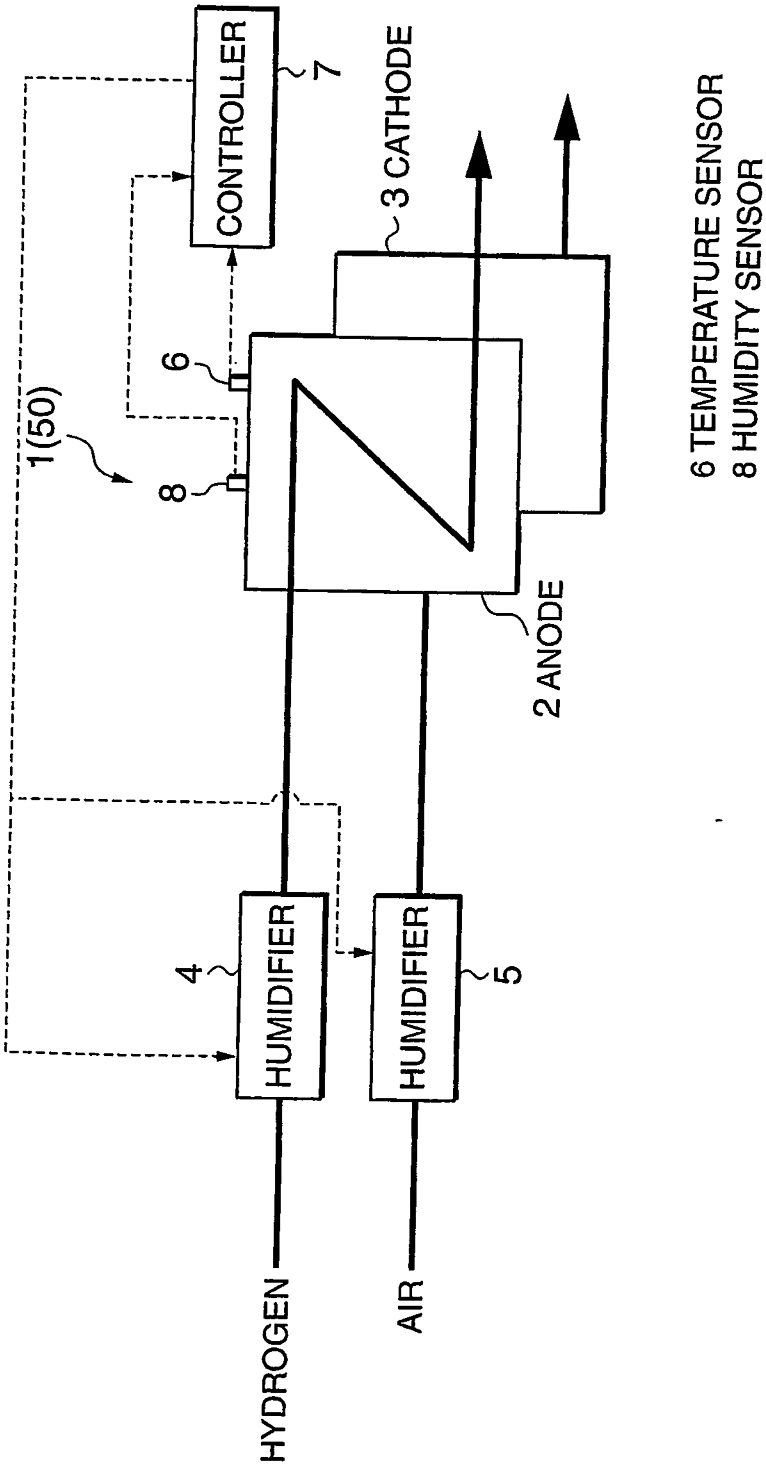
CONTROLLER
7
3 CATHODE
6
8
1(50)
2 ANODE
HUMIDIFIER
4
HUMIDIFIER
5
HYDROGEN
AIR
6 TEMPERATURE SENSOR
8 HUMIDITY SENSOR

FIG.4

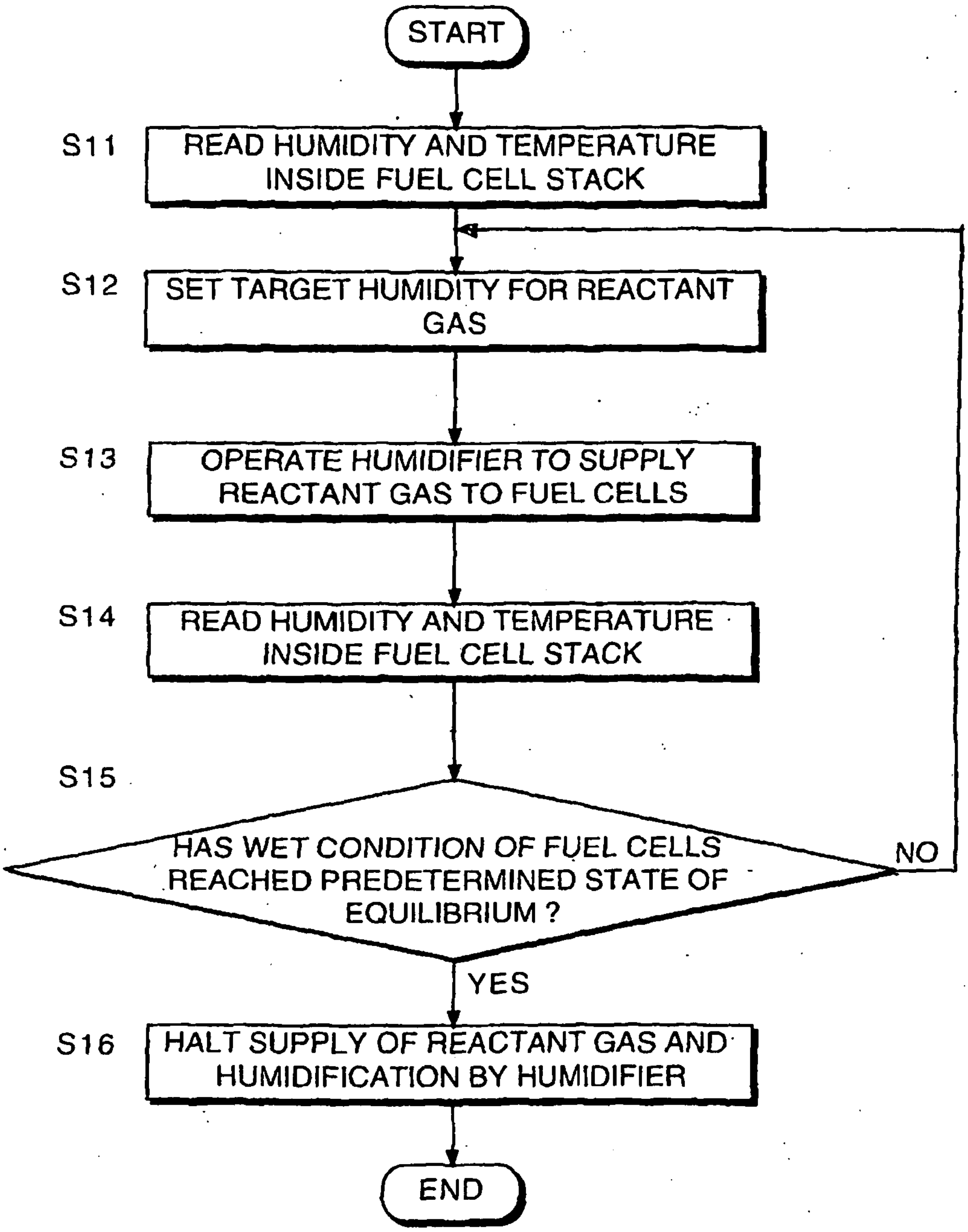
START
S11
READ HUMIDITY AND TEMPERATURE INSIDE FUEL CELL STACK
S12
SET TARGET HUMIDITY FOR REACTANT GAS
S13
OPERATE HUMIDIFIER TO SUPPLY REACTANT GAS TO FUEL CELLS
S14
READ HUMIDITY AND TEMPERATURE INSIDE FUEL CELL STACK
S15
HAS WET CONDITION OF FUEL CELLS REACHED PREDETERMINED STATE OF EQUILIBRIUM ?
NO
YES
S16
HALT SUPPLY OF REACTANT GAS AND HUMIDIFICATION BY HUMIDIFIER
END

FIG. 5

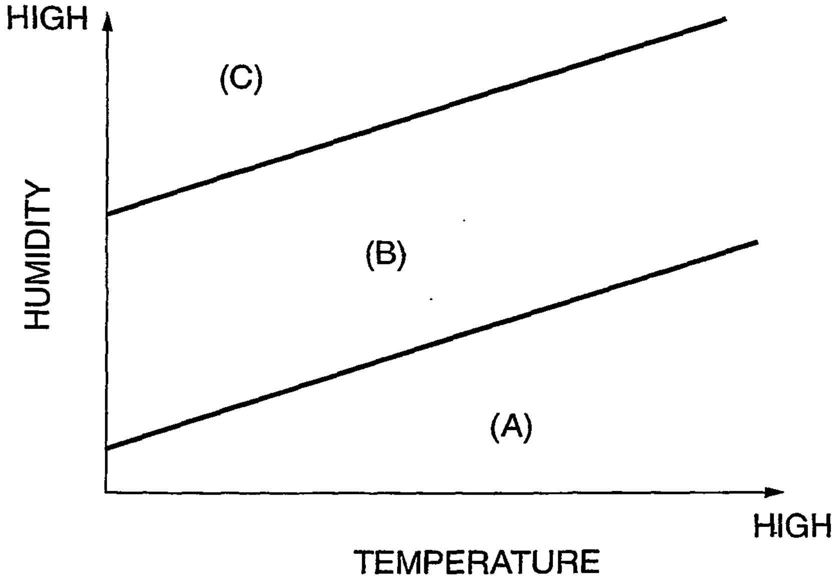


FIG.6

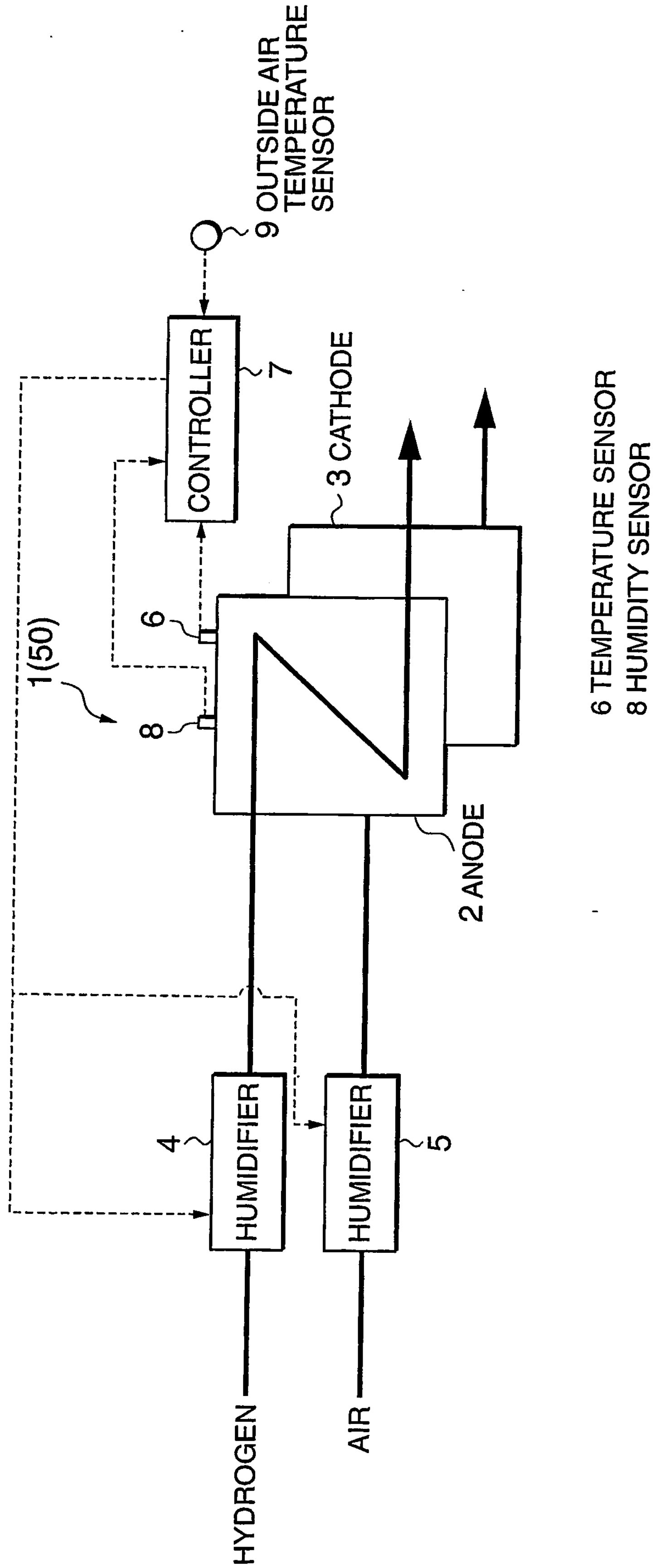
9 OUTSIDE AIR TEMPERATURE SENSOR
CONTROLLER
7
3 CATHODE
1(50)
6
8
2 ANODE
6 TEMPERATURE SENSOR
8 HUMIDITY SENSOR
HUMIDIFIER
4
HUMIDIFIER
5
HYDROGEN
AIR

FIG.7

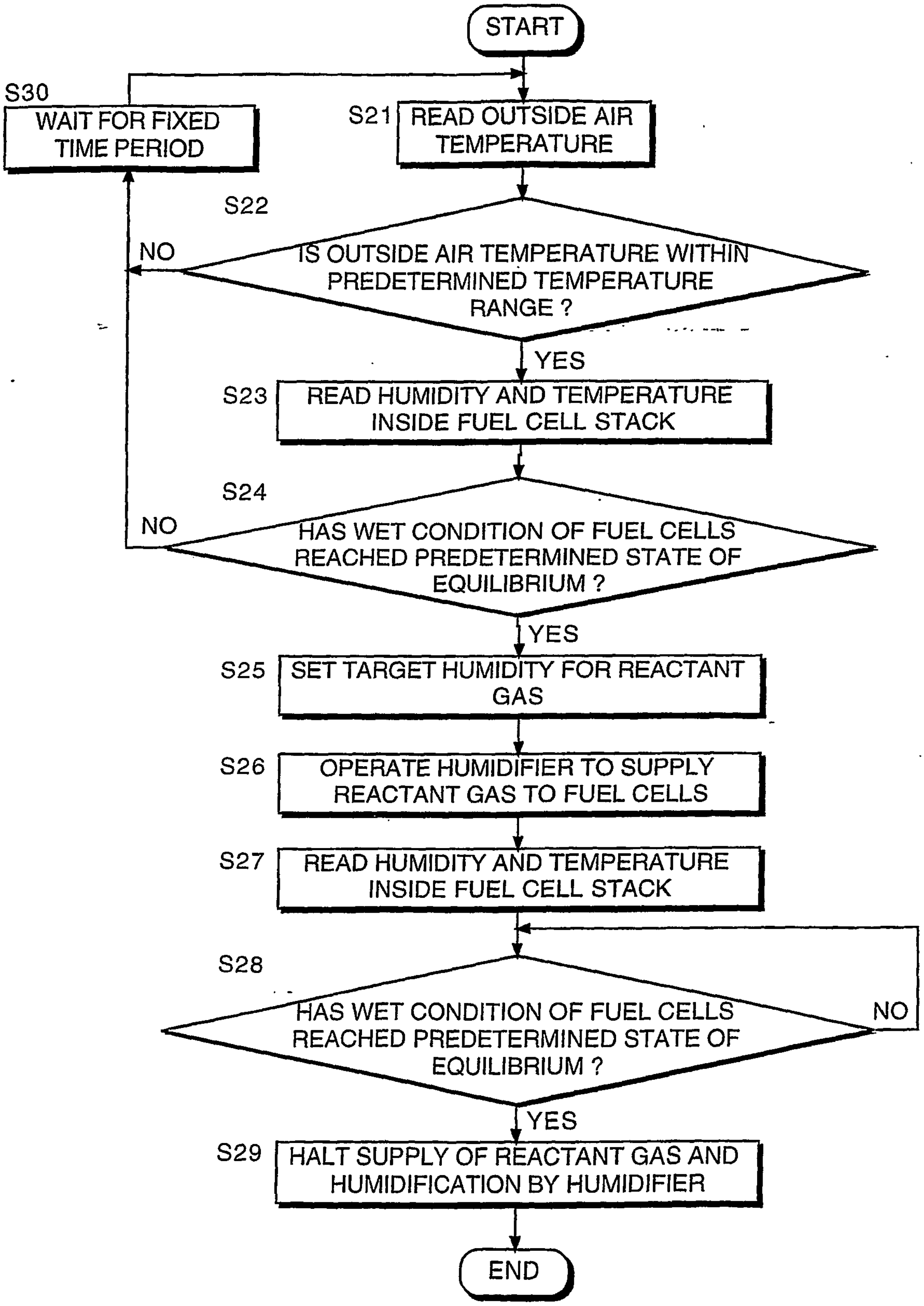
START
S30
WAIT FOR FIXED TIME PERIOD
S21
READ OUTSIDE AIR TEMPERATURE
S22
IS OUTSIDE AIR TEMPERATURE WITHIN PREDETERMINED TEMPERATURE RANGE ?
NO
YES
S23
READ HUMIDITY AND TEMPERATURE INSIDE FUEL CELL STACK
S24
HAS WET CONDITION OF FUEL CELLS REACHED PREDETERMINED STATE OF EQUILIBRIUM ?
NO
YES
S25
SET TARGET HUMIDITY FOR REACTANT GAS
S26
OPERATE HUMIDIFIER TO SUPPLY REACTANT GAS TO FUEL CELLS
S27
READ HUMIDITY AND TEMPERATURE INSIDE FUEL CELL STACK
S28
HAS WET CONDITION OF FUEL CELLS REACHED PREDETERMINED STATE OF EQUILIBRIUM ?
NO
YES
S29
HALT SUPPLY OF REACTANT GAS AND HUMIDIFICATION BY HUMIDIFIER
END

FIG. 8

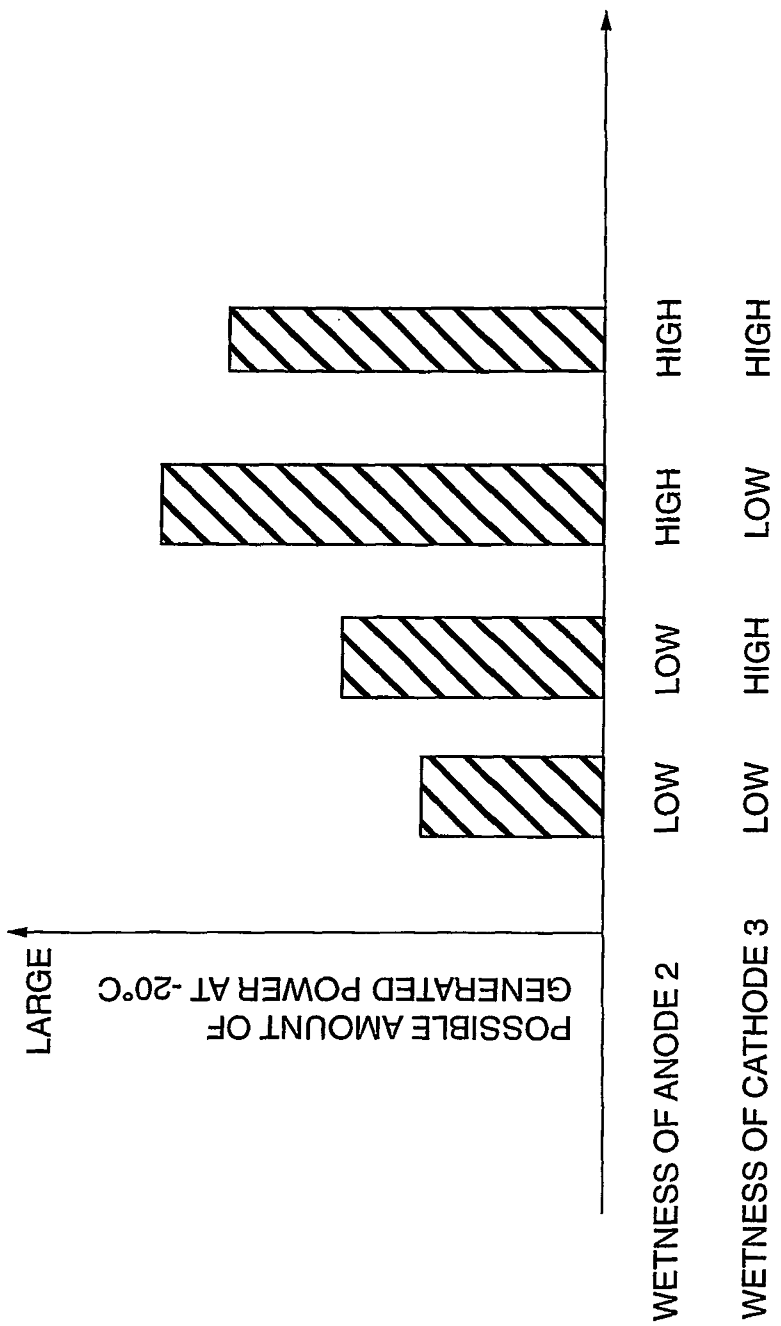
LARGE
POSSIBLE AMOUNT OF GENERATED POWER AT -20°C
WETNESS OF ANODE 2
WETNESS OF CATHODE 3
LOW LOW HIGH HIGH
LOW HIGH LOW HIGH

FIG.9

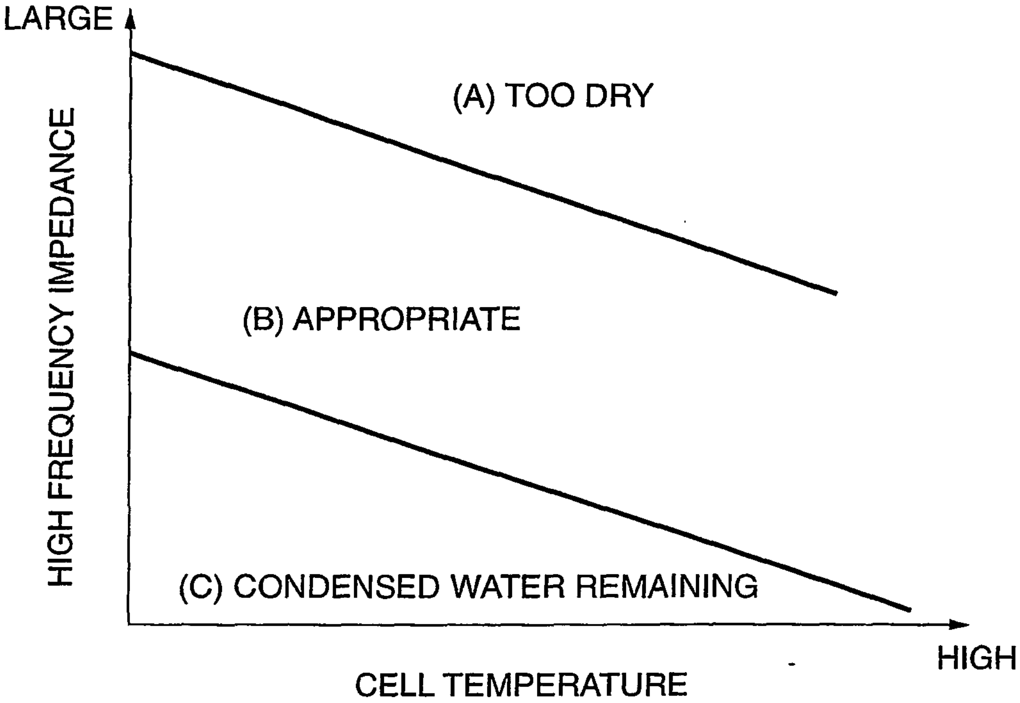
LARGE
HIGH FREQUENCY IMPEDANCE
(A) TOO DRY
(B) APPROPRIATE
(C) CONDENSED WATER REMAINING
HIGH
CELL TEMPERATURE

FIG.10

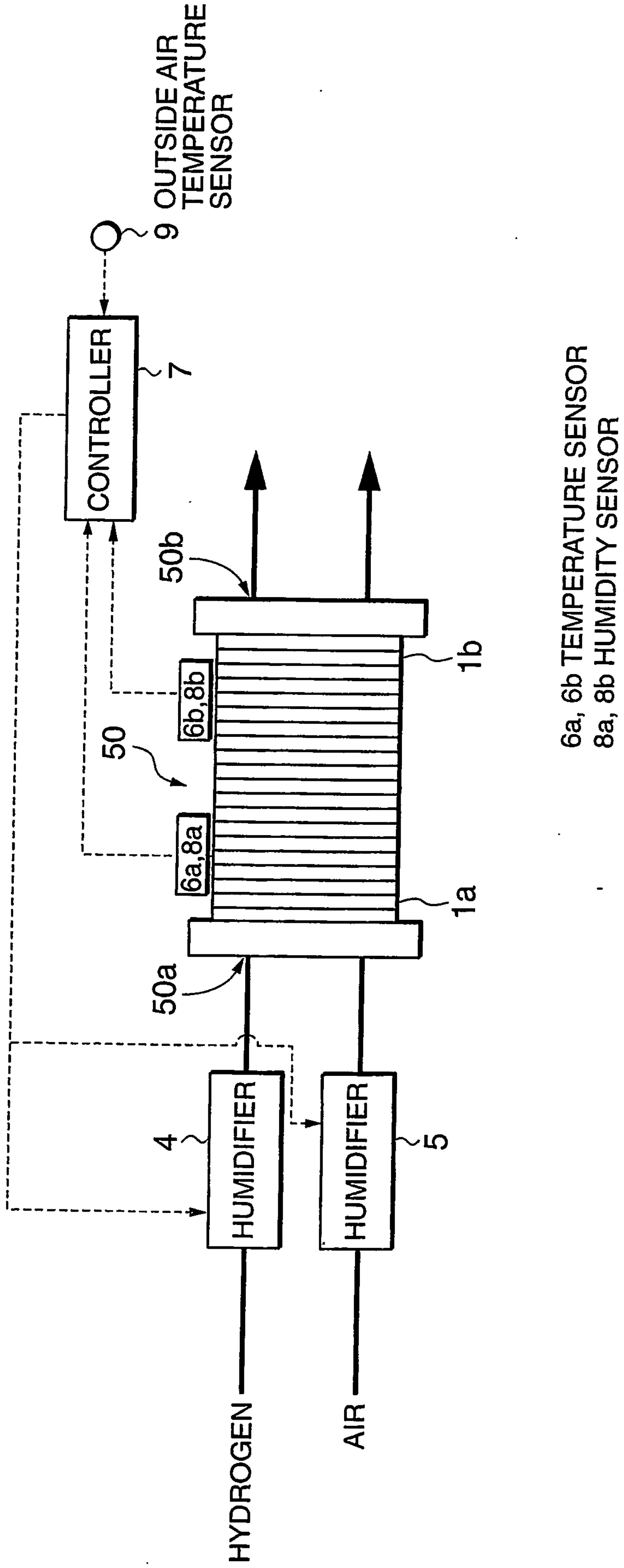
9 OUTSIDE AIR TEMPERATURE SENSOR
CONTROLLER
7
50b
50
6b,8b
6a,8a
1b
1a
50a
4
HUMIDIFIER
HUMIDIFIER
5
HYDROGEN
AIR
6a, 6b TEMPERATURE SENSOR
8a, 8b HUMIDITY SENSOR

FIG.11

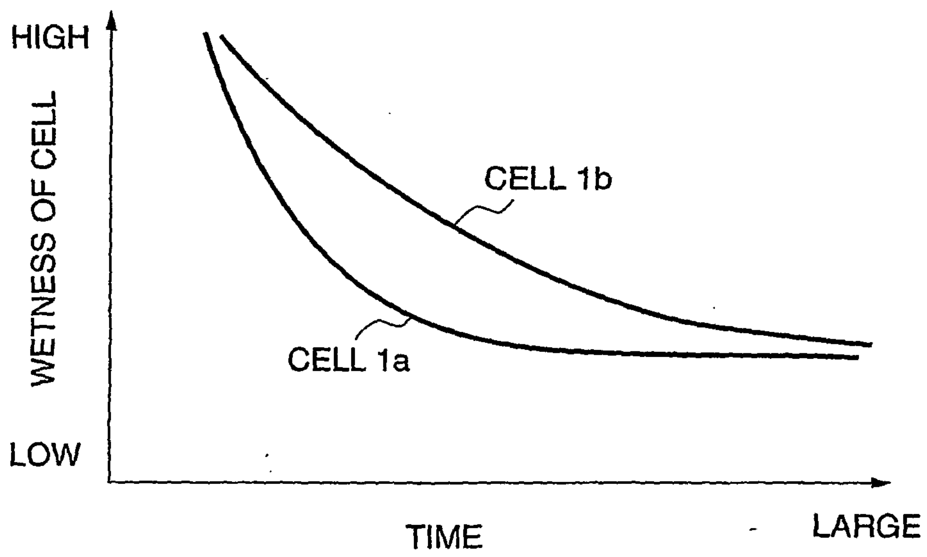


FIG.12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002208421 A
- US 6635374 B1
- US 2002192520 A1
- US 6376111 B1
- WO 0191216 A
- US 2001010875 A1
- WO 0042671 A
- JP 2000164231 A
- JP 60007068 A